(19) Europäisches Patentamt
European Patent Office
Office européen des brevets

(11) EP 3 722 843 A1

(12) EUROPEAN PATENT APPLICATION

(43) Date of publication:
14.10.2020 Bulletin 2020/42

(51) Int Cl.:
G02B 3/00 (2006.01)  G02F 1/01 (2006.01)
G02B 13/00 (2006.01)

(21) Application number: 19382276.4

(22) Date of filing: 11.04.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicants:
• Fundació Institut de Ciències Fotòniques
08860 Castelldefels (ES)
• Institució Catalana De Recerca I
Estudis Avançats (ICREA)
08010 Barcelona (ES)

(72) Inventors:
• PHILIPPET, Laurent
08860 Castelldefels (ES)
• BERTO, Pascal
08860 Castelldefels (ES)
• QUIDANT, Romain
08860 Castelldefels (ES)

(74) Representative: Ponti & Partners, S.L.P
C. de Consell de Cent 322
08007 Barcelona (ES)

(54) A COMPUTER-IMPLEMENTED METHOD OF GENERATING AN OPTIMIZED DESIGN OF A THERMALLY MODULATED OPTICAL DEVICE, AND THERMALLY MODULATED OPTICAL DEVICES

(57) The present invention relates to a computer-implemented method of generating an optimized design of a thermally modulated optical device comprising:
- a heating element to generate heat induced by a stimulus;
- a thermo-optical member in thermal contact with the heating element, to receive heat therefrom to vary its optical refractive index profile; and
- a controllable stimulus source to apply the stimulus to the heating element;
wherein the method comprises:

- requesting a target output wavefront shape to be obtained with a thermo-optical member when traversed by an incoming plane light wave; and
- generating the optimized design for generating the target output wavefront shape, by determining the same from calculus performed by an iterative algorithm on adjustable variable parameters associated.

Further aspects of the present invention relate to different thermally modulated optical devices optimized for obtaining different output wavefronts.

Fig. 2

EP 3 722 843 A1

**Description**

FIELD OF THE INVENTION

The present invention relates, in a first aspect, to a computer-implemented method of generating an optimized design of a thermally modulated optical device, suitable for generating an optimized design for obtaining target output wavefront.

Further aspects of the present invention relate to different thermally modulated optical devices optimized for obtaining different output wavefronts.

BACKGROUND OF THE INVENTION

Recent advances in optical field shaping have profoundly transformed photonics research and industry. Controlling the phase and the amplitude of light waves has enabled major advances in applications ranging from imaging and information technology to medical optics.

Among the different phase modulation approaches, Spatial Light Modulators (SLMs) have quickly become the gold standard to dynamically control the spatial phase profile of an incoming wavefront. Nowadays, million-pixel Liquid Crystal SLMs (LC-SLMs) are the tool of choice for high-resolution versatile light shaping. However, liquid crystals are inherently polarization-sensitive, and the very principle of LC-SLM phase manipulation makes it wavelength-dependent and limited to ranges of a few radians. In addition to the discrete nature of LC-SLMs pixels, which can only approximate continuous shapes, these drawbacks somehow reduce their range of applicability, in particular for imaging. Deformable mirrors, another type of SLM whose surface can be modified using micromechanical or electromagnetic actuators, overcome both limitations. By offering time response below 100 $\mu$s, they have become key elements in adaptive optics and greatly contributed to the fields of astronomy, ophthalmology and microscopy. However, they only offer a limited number of actuators, and are therefore essentially used in low spatial resolution, low-order aberration corrections. Besides their manufacturing complexity and price, their bulkiness and reflective operation modes are a crucial roadblock in applications such as endoscopic imaging.

Thanks to their compact design, cost efficiency, and their ability to work in transmission over a broad wavelength range, tuneable lenses have found many research and general public applications. In contrast to LC-SLMs, they allow continuous and high dynamic range wavefront modifications within a fixed range of shapes, usually spherical. Most existing technologies are based on polymer or liquid surface (or interface) deformations. While commercial devices using electrowetting or pressure regulation typically have centimetre dimensions, extensive efforts have been recently made to develop tuneable microlenses by using electro-mechanic, thermo-pneumatic, electromagnetic, optical and thermal actuators, or by using stimuli-responsive hydrogels. Although a recent work demonstrated tuneable astigmatism using a complex and dedicated engineering on elastomer surfaces, more complex shapes cannot be generated: the big majority of devices is still limited by the few degrees of freedom available to mechanical interface deformations, restricting the shaping to spherical wavefronts, i.e. lenses of variable vergence.

However, mechanical deformations of the optics thickness are not the only way to control the optical phase: one can also change the refractive index. Among the few parameters which can influence the dielectric permittivity (e.g. pressure, electric or magnetic fields...), temperature is probably the easiest to manipulate.

The permittivity and refractive index of most materials are indeed temperature dependent, a phenomenon which can be considered linear over a moderate temperature range (i.e. $\Delta n(T) = [dn/dT].\Delta T$). Although the thermo-optic coefficient $dn/dT$ is low (typ. of the order of $10^{-4}$-$10^{-5}$ in dielectrics), this thermo-optical phenomenon which is the cause of mirages is used in a wide range of photothermal techniques including photo- or thermoreflectance, absorption spectroscopies or nano-object detection to cite a few. Recently, the present inventors demonstrated that tuneable microlenses can be generated by illuminating photo absorbing particles, such as absorbing plasmonic nanoparticles arrays, with IR light in order to locally and thermally modify the refractive index of a surrounding thermo-optical material (such as water), as disclosed in US9606419B2.

While most of these methods use an optical stimulation to generate heating through absorption, it should be acknowledged that this is not the most practical choice for industrial, domestic, or even laboratory applications: historically, electrical control has always prevailed whenever it was available. Then, the present inventors also disclosed in patent EP3149526A1, where electrical resistors were in charge of locally modifying the refractive index of a thermo-optical material in thermal contact therewith.

Both the resistor patterns disclosed in EP3149526A1 and the photo-absorbing particle patterns disclosed in US9606419B2 are clearly improvable in order to be optimized to obtain specific target output wavefronts.

Moreover, particularly for the electrical approach, obtaining an optimized design of a thermally modulated optical device for a target (not known in advance) output wavefront is a difficult and time-consuming task, which is conventionally carried out manually or empirically.

It is, therefore, necessary to provide an alternative to the state of the art which covers the gaps found therein, by providing an automatic method of generating an optimized design of a thermally modulated optical device, and also thermally modulated optical devices optimized to generate target output wavefronts.

SUMMARY OF THE INVENTION

To that end, the present invention relates, in a first aspect, to a computer-implemented method of generating an optimized design of a thermally modulated optical device, wherein the thermally modulated optical device comprises:

- a heating element, which is configured to generate heat induced by a stimulus;
- a thermo-optical member, made of a thermo-optical material, in thermal contact with said heating element, to receive heat transferred thereby, wherein the at least one thermo-optical material has an optical refractive index profile that is temperature dependent; and
- a controllable stimulus source configured and arranged to apply at least said stimulus to the heating element so that heat is transferred therefrom to the thermo-optical member to locally modify its optical refractive index profile so that, when traversed by an incoming plane light wave, a specific spatial phase profile $\Delta\varphi$ or output wavefront shape is generated.

Preferably, for some embodiments, the heating element is planar, and, also preferably, the thermo-optical member is also planar.
However, for other embodiments, the heating element and/or the thermo-optical member is/are not planar, having, for example, a curved shape.
The method of the first aspect of the present invention comprises:

- requesting a target output wavefront shape to be obtained with the thermo-optical member when traversed by said incoming plane light wave; and
- generating said optimized design for at least said heating element, including an optimized layout pattern, for generating said target output wavefront shape, by determining the same from calculus performed by an iterative algorithm on adjustable variable parameters associated to an initial geometry of a heating element, including at least dimensional parameters.

For an embodiment, the method comprises generating the optimized design not only for the heating element but also for the thermo-optical member, including an optimized thickness, for generating the target output wavefront shape, by determining the same from the above mentioned calculus performed by an iterative algorithm also on adjustable variable parameters associated to an initial geometry of a thermo-optical member.
According to an embodiment, the method comprises randomly generating the above mentioned adjustable variable parameters.
The above mentioned initial geometry of heating element comprises, for a preferred embodiment, a layout pattern with N circumscribed wire loops having a wire thickness $h_g$, a wire width $w(r_i, \theta)$, and a radius $r_i$, when the wire loops are circular, or half-transverse dimension $r_i$ when the wire loops are non-circular, wherein $\theta$ refers to the angular position along the wire loop, wherein $N$, $h_g$, $w(r_i, \theta)$, and $r_i$, are said adjustable variable parameters.
For an implementation of said preferred embodiment, the adjustable variable parameters further include at least one of:

- an anisotropy variable parameter $A_i$ related to each wire loop;
- the thickness $h$ of the thermo-optical member;
- the optimized area of the pupil;
- boundary condition parameters regarding the boundaries of the thermo-optical member or of portions thereof.

Said boundary condition parameters at least refer to outer boundaries defining the outer contour of the thermo-optical device.
For an embodiment, the method of the first aspect of the present invention comprises generating optimized designs of a plurality of thermally modulated optical devices forming an array, including a plurality of heating elements, in the same or in a similar manner as explained in the present document for the optimized design of a thermally modulated optical device.
For another embodiment, the method of the first aspect of the present invention comprises generating an optimized design of a thermally modulated optical device comprising an array of heating elements, each configured to generate heat induced by a respective stimulus, and a common thermo-optical member in thermal contact with all the heating elements of the array, wherein the generation of the optimized design comprises at least generating a plurality of optimized designs for the heating elements, one per heating element, in the same or in a similar manner as explained in the present document for the optimized design of a heating element.

For an implementation of any of said two embodiments, the method of the first aspect of the present invention comprises generating said optimized designs of said array of thermally modulated optical devices or of said array of heating elements, for generating a single common target output wavefront shape. For this implementation, the interplay/cross-talk between the plurality of heating elements is taken into account as a parameter for the generation of the optimized designs.

For an alternative implementation of said embodiment, the method of the first aspect of the present invention comprises generating said optimized designs of the array of thermally modulated optical devices or of the array of heating elements, for generating a plurality of target output wavefront shapes, one per optimized design and/or one per two or more optimized designs.

For an implementation of said embodiment, said boundary condition parameters also refer to boundaries between contiguous thermo-optical devices of the array. Said boundaries are, for example, provided in the form of barriers demarcating contiguous regions within which one or more heating elements are placed.

Embodiments and implementations thereof equivalent to the ones described above for the different types of arrays are also embraced by the method of the first aspect of the present invention for groups of heating elements and/or of thermally modulated optical devices which do not form arrays.

Also, for a further implementation of the above described embodiments for groups of heating elements and/or of thermally modulated optical devices which form arrays, and also for those which do not form arrays, the heating elements are independently stimulable (and thus isolated from each other regarding the type of stimulus, i.e. electrically isolated when the stimulus is an electrical signal) by at least two independent stimulus sources, to generate respective independent output wavefront shapes, designed according to the method of the first aspect of the present invention.

For a variant of said implementation, the heating elements are placed in the same plane.

For an alternative variant of said implementation, the at least two heating elements are placed in different planes or layers, whether in a common thermo-optical member, or in at least two thermo-optical members in thermal contact with each other, thus providing a multilayer approach where the heating elements are independently stimulable.

To the above mentioned end, the present invention relates, in a first aspect, to a computer-implemented method of generating an optimized design of a thermally modulated optical device, wherein the thermally modulated optical device comprises:

- a heating element, which is configured to generate heat induced by a stimulus;
- a thermo-optical member, made of a thermo-optical material, in thermal contact with said heating element, to receive heat transferred thereby, wherein the at least one thermo-optical.

Advantageously, the iterative algorithm is an evolutionary algorithm, such as a genetic algorithm.

In order to generate the optimized design, the method of the first aspect of the present invention comprises, for an embodiment, combining the iterative algorithm with a stimulus-thermo-optical model for at least heating element geometries including the above mentioned initial geometry and geometries derived therefrom, wherein said stimulus-thermo-optical model relates each heating element geometry with a respective output wavefront shape, through:

- a respective structured Joule power map $P(T)$ induced when said stimulus is applied to the heating element; and
- a thermally induced Optical Path Difference (OPD) $\delta$ accumulated by an incoming plane light wave passing through the thermo-optical member, wherein said OPD $\delta$ is calculated by a convolution with said respective structured Joule power map $P(T)$ and the Green's function for the OPD $G_\delta$, i.e, the OPD distribution induced by a point like source of heat. For a laterally infinite and homogeneous medium, the Green's function stands for

$$G_\delta = \frac{[dn/dT]}{4\pi\kappa} \cdot \sinh^{-1}\left(h/r\right),$$

where $\kappa$, $h$ and $r$ refer to the thermal conductivity and thickness of the thermo-optical medium and radial coordinate. However, it is worth mentioning that the expression of the Green's function can be updated take into account boundary conditions.

Preferably, the generation of the optimized design comprises the iterative algorithm solving an inverse problem departing from a target OPD $\delta$ associated to the target output wavefront shape to obtain a respective target structured Joule power map $P_0 = P(T_0)$ where $T_0$ refers to the room temperature, and the corresponding optimized design of at least the associated heating element, including adjusted parameters associated to an optimized geometry.

For an embodiment, a trade-off between spatial resolution and thermo-optical member thickness is taken into account in said convolution, so that the thickness of the thermo-optical member is reduced to increase the spatial resolution.

For an embodiment for which the iterative algorithm is a genetic algorithm, the method of the first aspect of the present invention comprises said genetic algorithm:

a) investigating the performances of a first generation population of designs of at least heating elements through a merit function defined to optimize agreement with the target output wavefront shape,

b) selecting the best designs from said population and using them as parents to produce, via crossover, more optimized designs for a second generation population, and also applying a random process with low probability, mutation, on a chosen set that includes said adjustable variable parameters, to avoid convergence toward local minima, and

c) performing a further sequence of steps a) and b) on said second generation population, to obtain a third generation population, and so on for a plurality of iterations of said sequence of steps a) and b) for further subsequent generation populations until an error between the target output wavefront shape and the one obtained with the obtained design is less than a predetermined value or until a given number of iterations is achieved, to obtain the optimized design of at least the heating element for the target output wavefront shape.

Generally, the target output wavefront shape corresponds to an elementary Zernike polynomial function $Z_n^m$, where $n$ stands for the radial degree and $m$ for the azimuthal degree.

However, for an alternative embodiment, the target output wavefront corresponds to a combination of Zernike polynomials.

The first aspect of the present invention then constitutes a new paradigm-shift to accurately engineer optical wavefronts by exploiting electrically-induced thermal phase-shifts, preferably at the micro or nano scale. By using an optimized design, resulting from an iterative algorithm, broadband, polarization-insensitive electrical components which can apply a predetermined, continuous local wavefront shaping with unprecedented degrees of freedom are demonstrated. This device, coined as *SmartLens,* can efficiently generate elementary Zernike polynomial functions and therefore dynamically create most of the standard optical functions. When arranged in an array, it can control, correct or refocus various region of polychromatic wavefronts or images, as will be illustrated in a simple but powerful example based on a tuneable broadband microlens array.

Hence, the first aspect of the present invention constitutes a novel approach to deterministic phase-front shaping enabled by the unique combination of a planar stimulus-powered thermo-optical module and iterative, preferably genetic, optimization. To illustrate the potential of the so-called SmartLens approach, its ability to generate free-form optical wavefronts and correct aberrations will be demonstrated in a section of the present document below. This simple and compact technology complements the existing optical shaping toolbox by offering low chromatic aberration, polarization insensitive and transmission mode components which can be readily integrated to existing optical systems.

For an embodiment of the method of the first aspect of the present invention, the heating element is an electrically resistive element, the stimulus source is a controllable electrical source, and the stimulus is an electrical signal. For an implementation of that embodiment, the above mentioned stimulus-thermo-optical model is an electro-thermo-optical model.

For an alternative embodiment of the method of the first aspect of the present invention, the heating element is a photo-absorbing element, the stimulus source is a spatially controllable light source, and the stimulus is light having at least one spectral component which can be absorbed by the photo-absorbing material of the photo-absorbing element to photothermally generate heat. For an implementation of that embodiment, the above mentioned stimulus-thermo-optical model is a light-thermo-optical model.

A second aspect of the present invention relates to a thermally modulated optical device, comprising:

- a heating element configured to generate heat induced by a stimulus;
- a thermo-optical member, made of a thermo-optical material, in thermal contact with said heating element, to receive heat transferred thereby, wherein the at least one thermo-optical material has an optical refractive index profile that is temperature dependent; and
- at least one stimulus source configured and arranged to apply at least said stimulus to the heating element so that heat is transferred therefrom to the thermo-optical member to locally modify its optical refractive index profile so that, when traversed by an incoming plane light wave, a specific spatial phase profile $\Delta\varphi$ or output wavefront shape is generated;

wherein the heating element is arranged on said thermo-optical member following a layout pattern including at least one loop.

In contrast to the thermally modulated optical devices known in the state of the art, in the one of the second aspect of the present invention the at least one loop is a single loop of thickness $h_g$, and wherein at least the radius $r_1$, when the single loop is circular, or half-transverse dimension $r_1$, when the single loop is non-circular, of the single loop, and the thickness $h$ of the thermo-optical member, are selected to generate an output wavefront shape or desired spatial phase shift $\Delta\varphi$, providing one of a flat phase profile, $\Delta\varphi = 0$, a converging phase profile, $\Delta\varphi > 0$, and a diverging phase profile, $\Delta\varphi < 0$.

A great advantage of the device of the second aspect of the present invention is that, due to the presence of only a single loop, the incoming light beam or portion of incoming light beam passing through the region of the thermo-optical member circumscribed by the single loop is not affected by the presence of any heating element, so that the static phase profile is not hampered by static aberrations that could be added by a heating element if present within said circumscribed region. This becomes very important especially for cases for which the heating element is not transparent to the wavelength of the incoming light beam, for example when the heating element is made of a non-transparent material.

A third aspect of the present invention relates to a thermally modulated optical device, comprising:

- a heating element configured to generate heat induced by a stimulus;
- a thermo-optical member, made of a thermo-optical material, in thermal contact with said heating element, to receive heat transferred thereby, wherein the at least one thermo-optical material has an optical refractive index profile that is temperature dependent; and
- at least one stimulus source configured and arranged to apply at least said stimulus to the heating element so that heat is transferred therefrom to the thermo-optical member to locally modify its optical refractive index profile so that, when traversed by an incoming plane light wave, a specific spatial phase profile $\Delta\varphi$ or output wavefront shape is generated;

wherein the heating element is arranged on said thermo-optical member following a layout pattern including at least one loop.

In contrast to the thermally modulated optical devices known in the state of the art, in the one of the third aspect of the present invention the layout pattern followed by its heating element has a geometry including two or more circumscribed loops formed by one or more strips of the heating element, wherein the width of each of said one or more strips varies at least radially for different loops of said two or more loops.

For an embodiment of the device of the third aspect of the present invention, the width w of the strip within each loop follows the following equation: $w(r_i, \theta) = w(r_i)(1 + A_i\cos(m\theta))$, where $r_i$ stands for the radius of the loop, when the loop is circular, or half-transverse dimension, when the loop is non-circular, $\theta$ refers to the angular position along the loop, $A_i$ is an anisotropy variable, to generate an output wavefront shape corresponding to a Zernike polynomial function $Z_n^m$, where $n$ stands for the radial degree, m for the azimuthal degree.

For an implementation of said embodiment, the width of each of the one or more strips is maintained constant within each loop, to generate an output wavefront shape corresponding to said Zernike polynomial function $Z_n^m$ for $m = 0$ (defocus, flat profile (i.e. piston), spherical aberration, etc.).

For an alternative implementation of said embodiment, the width of the strip varies also angularly along at least one of the two or more loops, to generate an output wavefront shape corresponding to said Zernike polynomial function $Z_n^m$ for $m \neq 0$ (for example vertical astigmatism).

For an embodiment of the device of the third aspect of the present invention, the one or more strips of the heating element are at least two strips independently stimulable (and thus isolated from each other regarding the type of stimulus, i.e. electrically isolated when the stimulus is an electrical signal) by at least two independent stimulus sources, to generate respective independent output wavefront shapes.

For an implementation of said embodiment, the at least two strips are placed in the same plane.

For an alternative implementation of said embodiment, the at least two strips are placed in different planes or layers, whether in a common thermo-optical member, or in at least two thermo-optical members in thermal contact with each other, thus providing a multilayer approach where the strips are independently stimulable.

For an embodiment of the device of the present invention, for any of its second and third aspects, the heating element is an electrically resistive element, the stimulus source is a controllable electrical source, and the stimulus is an electrical signal.

For an alternative embodiment, also valid for any of the second and third aspects of the present invention, the heating element is a photo-absorbing element, the stimulus source is a spatially controllable light source, and the stimulus is light having at least one spectral component which can be absorbed by the photo-absorbing material of the photo-absorbing element to photothermally generate heat.

For some embodiments, of the three aspects of the present invention, the designed thermally modulated optical device comprises several phase masks, corresponding for instance to different Zernike polynomials, arranged so as to be multiplexed on the same sample either by superimposing electrical layers with different geometries or by addressing independently each spiral loop of the heating element, allowing the dynamic correction of most aberrations.

For some embodiments valid for all the aspects of the present invention, the thermally modulated optical device further comprises a substrate (such as a glass substrate) on top of which the heating elements are deposited. For those embodiments, strictly speaking the incoming plane light wave also traverses the heating element(s) and also the substrate, although the thermally modified thermo-optical member is the element that really shapes the incoming light wave.

Alternatively, no substrate is included by the thermally modulated optical device of any of the aspects of the present invention, so that the heating elements are deposited directly on the thermo-optical member.

According to an embodiment, the device of any of the second and third aspects of the present invention further comprises a control unit operatively connected to the at least one stimulus source to control the same to make it generate and apply said stimulus to the heating element.

For an embodiment of the device of the present invention, for any of its second and third aspects, the device comprises a plurality of heating elements forming an array, in thermal contact with a common thermo-optical member or with a corresponding plurality of thermo-optical members, and a plurality of stimulus sources each configured and arranged to apply a stimulus to a respective heating element of the array.

For an implementation of said embodiment, the device also comprises the above mentioned control unit, which is configured to control the plurality of stimulus sources to make then generate and apply the stimuli to the respective heating elements.

According to a variant of said implementation, the control unit is configured to control the plurality of stimulus sources so that they generate, and apply to the respective heating elements, stimuli which make the array of heating elements generate a single common output wavefront shape. For this variant, the interplay/cross-talk between the plurality of heating elements is taken into account by the control unit as a parameter for the control of the stimulus sources. A higher degree of control over the entire transmitted single common output wavefront shape is thus achieved.

For an alternative variant of said implementation, the control unit is configured to control the plurality of stimulus sources so that they generate, and apply to the respective heating elements, stimuli which make the array of heating elements generate a plurality of output wavefront shapes, one per heating element and/or one per two or more heating elements.

BRIEF DESCRIPTION OF THE FIGURES

In the following some preferred embodiments of the invention will be described with reference to the enclosed figures. They are provided only for illustration purposes without however limiting the scope of the invention.

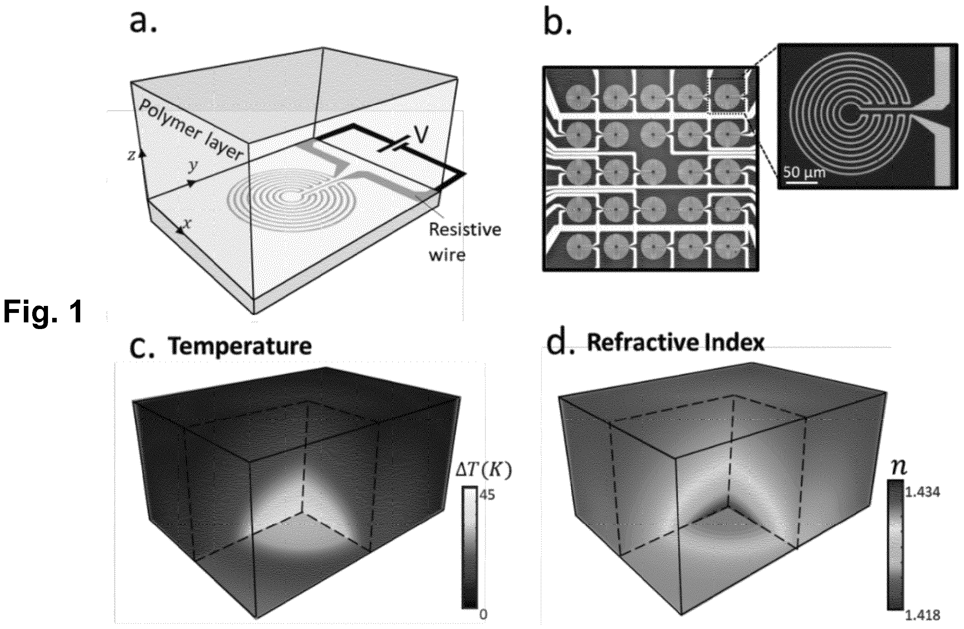

Figure 1 schematically shows the principle of the electrically tuneable micro-optic, for an embodiment of the present invention: electrically resistive elements formed by resistive spirals electrically-controlled induce thermal refractive index variation in a thermo-responsive material (such as PDMS: Polydimethylsiloxane or any transparent material with a significantly high $dn/dT$) of a thermo-optical member. (a) Schematic of the system. (b) Optical reflection images of an array of spirals. (c) 3D Representation of a typical Temperature rise in a polymer layer inducing (d) refractive index changes.

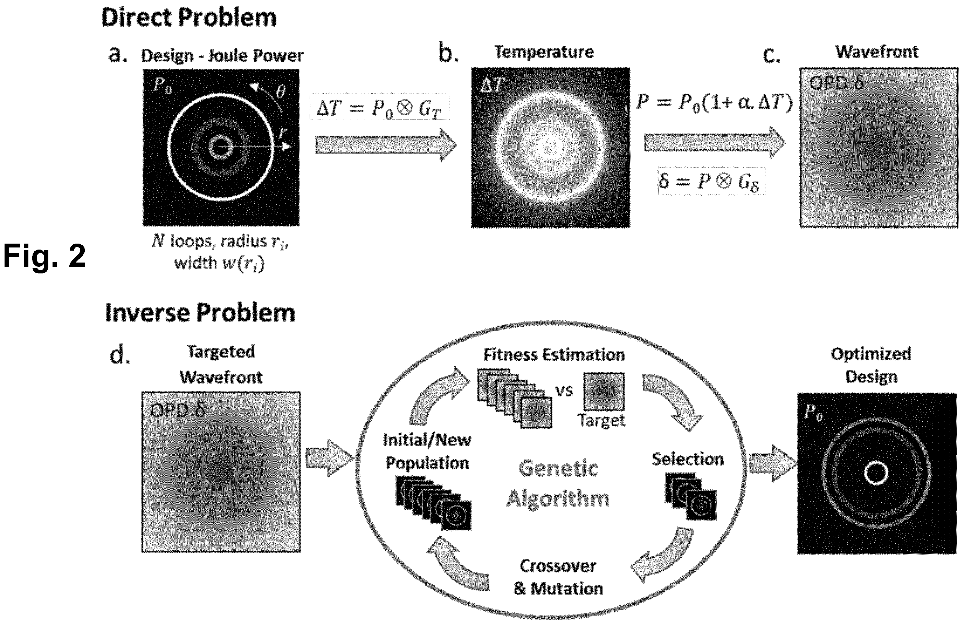

Figure 2 schematically shows the modelling and wavefront engineering procedure of the method of the first aspect of the present invention, for an embodiment. The spiral heater is modelled by an assembly of $N$ resistive circular wire-loops of radii $r_i$ and widths $w(r_i)$. An electric current flow induces a (a) structured Joule power map $P_0$ from which (b) the temperature map $\Delta T$ (in $z = 0$) is calculated by convolution with the thermal Green's function $G_T$. (c) The thermally induced Optical Path Difference (OPD) $\delta$ accumulated by an incoming plane wave passing through the polymer layer is then calculated by a convolution with $G_\delta$, the Green's function for the OPD. (d) A genetic algorithm enables to solve the inverse problem in order to precisely determine the electrical design which optimally produces the targeted wavefront.

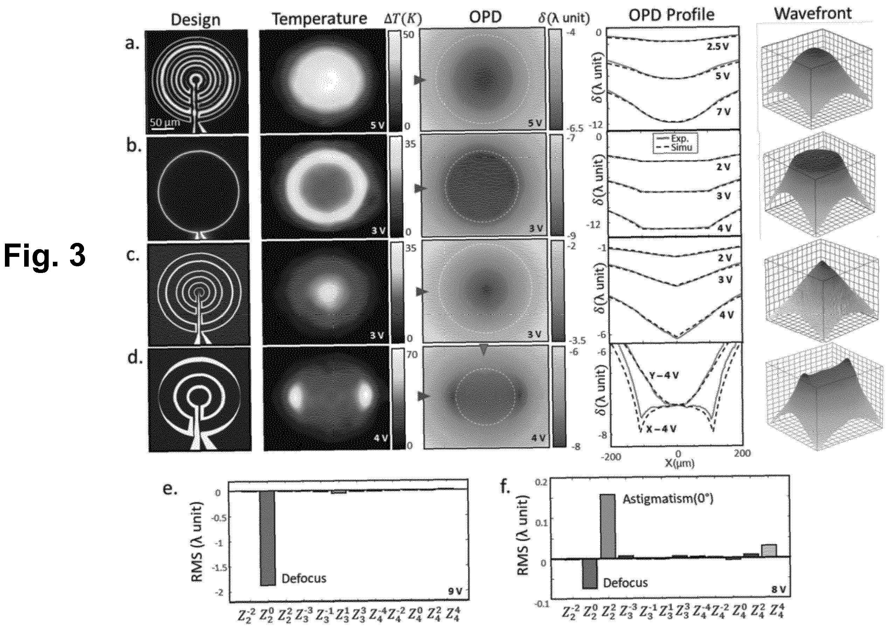

Figure 3 shows some wavefront engineering performed according to the method of the first aspect of the invention, and also some layout patterns for the heating element of the thermo-optical devices of the second and third aspects of the present invention. Experimental results obtained on a set of 4 spiral geometries optimized for 4 different wavefronts: (a) Defocus (diverging lens). (b) Flat profile (piston). (c) Conical surface (inverted-axicon). (d) Vertical Astigmatism. In each case, an optical reflection image of the fabricated spiral design and the corresponding experimental temperature and OPD maps are shown. On each OPD map, the dashed circle indicates the optimal pupil. A comparison between calculated (dashed line) and experimental (solid line) OPD profiles, for different voltages, or along different directions (indicated by a right-pointing or down-pointing arrow on the OPD map) are also provided as well as 3D representations of the experimental wavefronts. Zernike decompositions (for $n = 2$, 3 and 4) of the measured OPDs are presented for (e) the defocus (shown in (a)) and (f) the astigmatism (shown in (d)).

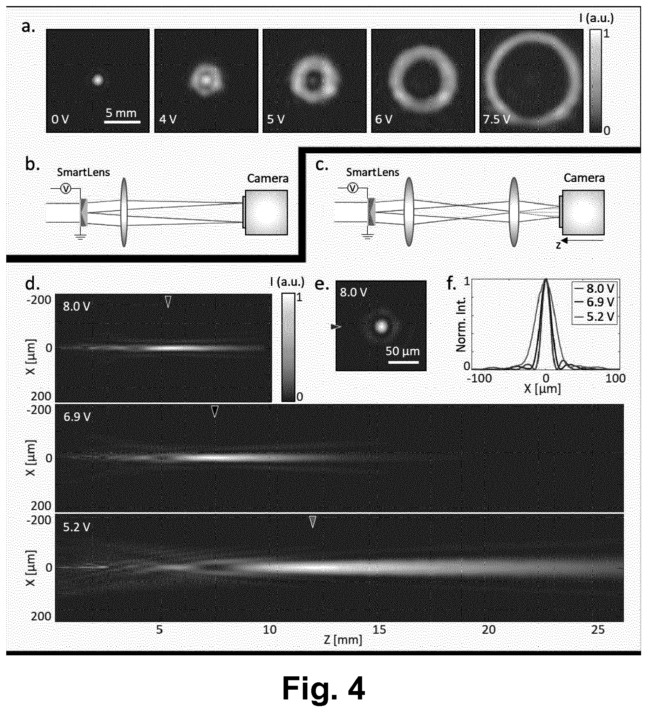

Figure 4 shows the generation of a tuneable annular beam and a Bessel-Gaussian beam. (a) Intensity profiles of annular beams obtained for different voltages applied on the SmartLens, transforming a Gaussian beam into an annular beam. The scale bar is 5 mm. (b) Simplified schematic of the setup for annular beam generation. A SmartLens optimized to generate a conical wavefront (inverted axicon - see design Fig. 3(c)) is illuminated by a collimated laser beam. The pupil size (D = 200 $\mu$m in the SmartLens plane) is controlled by a pinhole located in a conjugated plane (not shown). The intensity profile is gaussian when the device is off (0 V) and becomes a ring with a voltage-controlled diameter when it is switched on. (c) Simplified schematic of the Bessel-Gaussian beam generation setup, using the same illumination conditions. When refocused in the image space, the annular beam produces an interference which generates a Bessel-Gaussian pattern and is detected by the camera. 3D intensity profiles are acquired by Z-scanning along the optical axis direction. (d) XZ-section of the 3D intensity profiles for different applied voltages (8.0, 6.9 or 5.2 V). As the voltage decreases, the axial extension of the beam increases. (e) XY-section of the Bessel-Gaussian pattern in its focal plane, for an applied voltage of 8.0 V. (f) 1D normalized intensity profile in the focal plane. As the voltage decreases, the width of the Bessel-Gaussian beam increases.

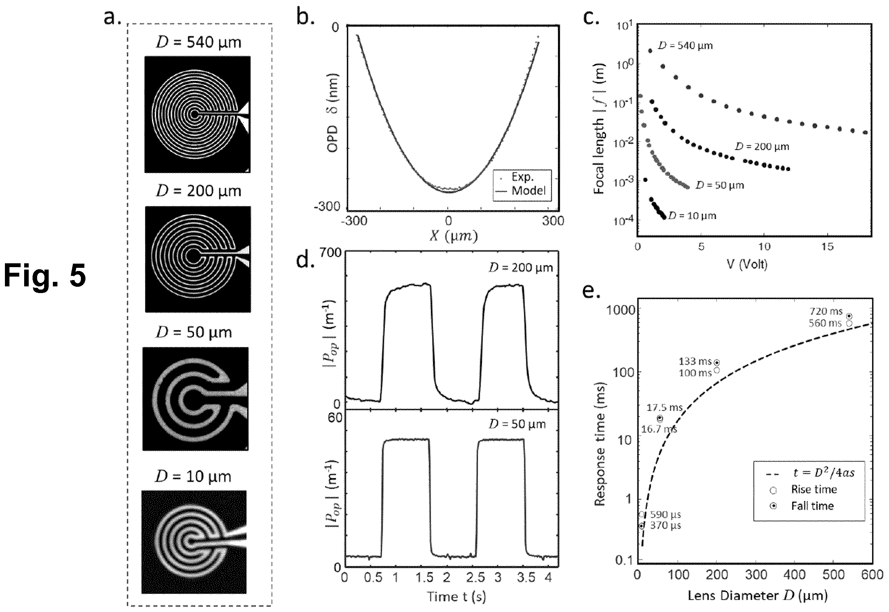

Figure 5 shows tuneability ranges and response times for 4 different spiral sizes obtained by the method of the first aspect of the present invention. (a) Optical reflection image of 4 spirals of diameters D = 10, 50, 200 and 540 $\mu$m. (b) Experimental OPD profile (dots). The SmartLens element acts as a diverging lens, the OPD profile is fitted by a parabola in order to estimate the focal length f (represented for D = 540 $\mu$m, V = 3 V). (c) Evolution of the measured vergence $V_f$ against applied voltage V for the 3 spiral sizes. (d) Temporal response for electrical square wave signals (0 - 2.5 V) at 0.5 Hz. (e) Evolution of the response time (in log scale) with the spiral diameter D. Experimental estimation of the rise time and fall time are in good agreement with the time scale of the temperature evolution on a surface of diameter D surrounding by the polymer (dashed line).

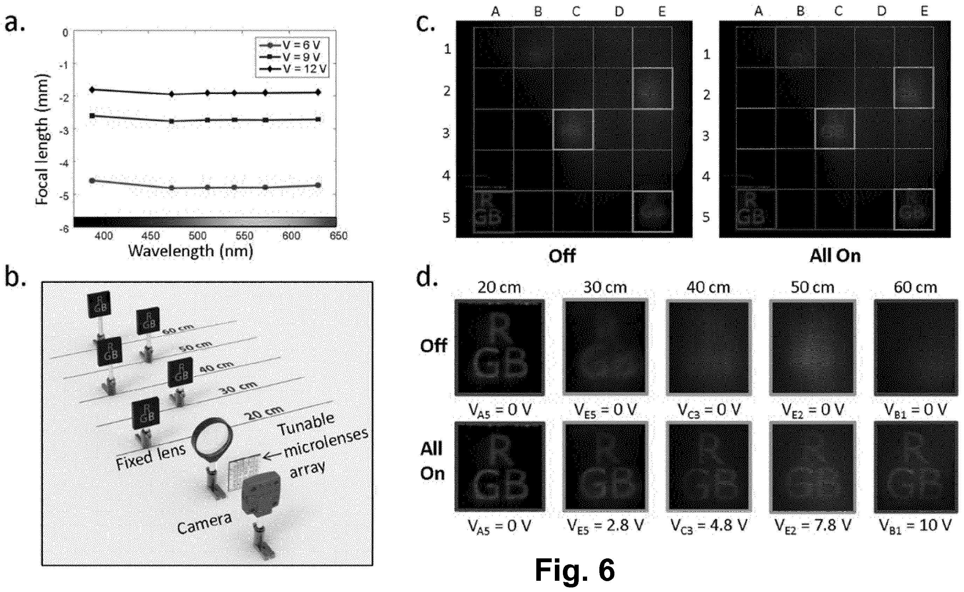

Figure 6 shows an experimental arrangement, and obtained results, which includes an array of microlenses designed according to the method of the first aspect of the present invention. (a) Chromaticity measurement: wavelength dependence of the focal length, for three different applied voltages 6, 9 and 12 V, for the diverging lens (D = 200 $\mu$m). (b) Simplified schematic of the multiplane imaging setup. A zoom lens (f = 35 mm) is used for imaging a scene. A 5x5 tuneable microlenses array is located close to the image plane of the lens, 5 mm forward, in order to simultaneously image five RGB objects placed at distances from 20 to 60 cm from the zoom lens. (c) The acquired images are divided in 5x5 regions. When the microlenses are all off, only the RGB object in A5 is imaged (d = 20 cm). For each RGB object in the field, the applied voltage (and so the focal length) of the corresponding microlens is scanned until the best focus is obtained. When all the microlenses are at their best focus (All on), all RGB labels are visible. (d) Zoom on the different image regions to better appreciate the simultaneous refocusing of the objects. The min/max value of the LUT has been adapted for objects at high distances (in the same amount for the "Off" and "On" case) to compensate for intensity losses at the collection.

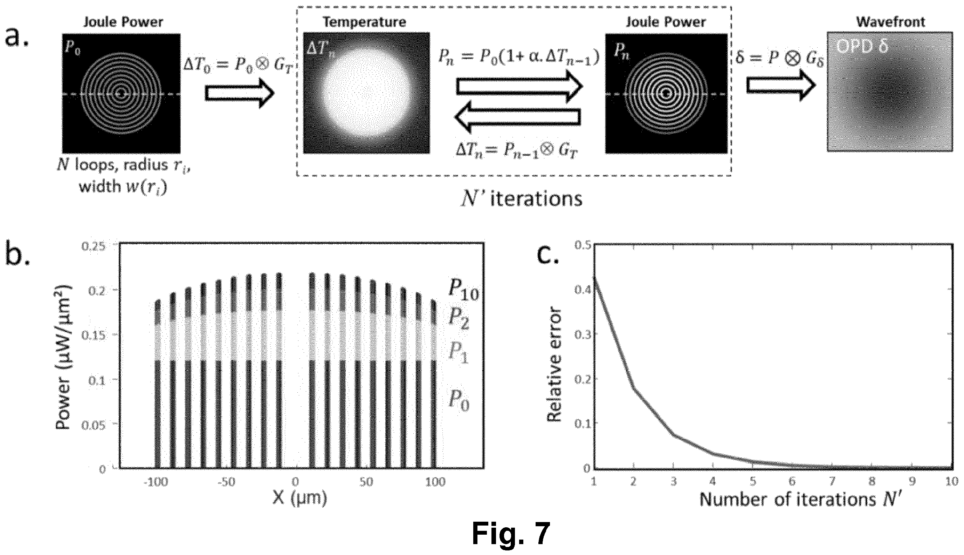

Figure 7 schematically shows a refinement of an electro-thermo-optical model with temperature-dependent resistivity used in the method of the first aspect of the present invention, for an embodiment. (a) Description of the complete wavefront calculation procedure. A first Joule power map $P_0$ is calculated from the number N, radii $r_i$, and widths $w(r_i)$ of the resistive loops in order to generate a temperature map $\Delta T_0$. As the power P depends on the local temperature rise $\Delta T$ (through the thermal dependence of the resistivity), the problem is clearly recursive and an iterative procedure on P and $\Delta T$ is needed, (b) Plot profile of the dissipated power map $P_n$ (along the dashed line on (a)) for steps n = 0, 1, 2 and 10. The local temperature increase not only impacts on the average value of the dissipated power but also its distribution (and thus the wavefront shape). (c) Relative error on the power map (defined as the standard deviation between $P_n$ and $P_{n-1}$) depending on the number of iterations. Realistic power and temperature maps are typically obtained after eight iterations.

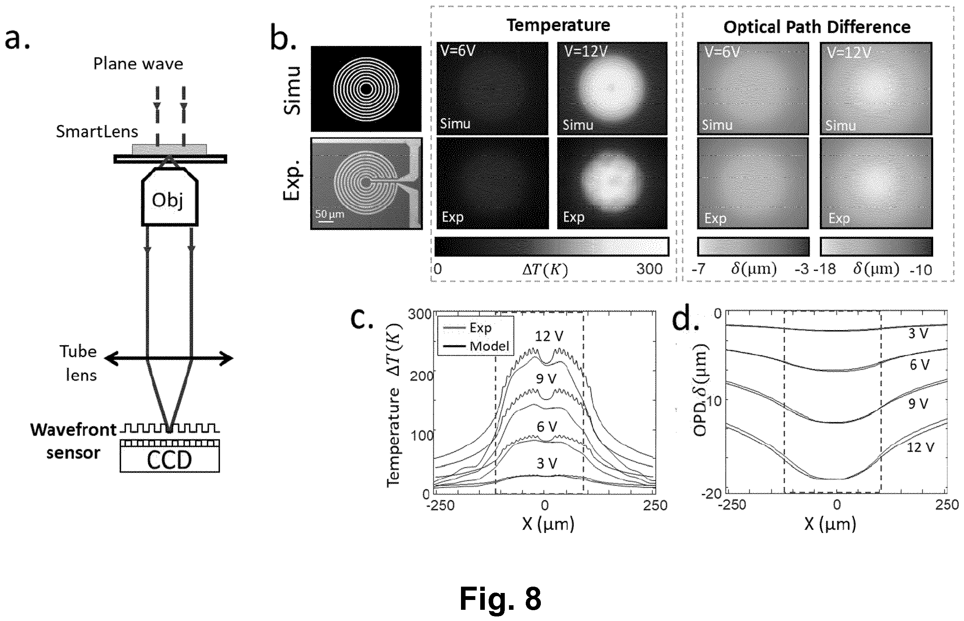

Figure 8 schematically shows the validation of the model of Figure 7, for an embodiment. (a) Description of the characterisation setup. The SmartLens device is illuminated by a plane wave (using a Kohler illumination with low numerical aperture) and imaged on a high spatial resolution wavefront sensor (SID4, Phasics SA) to obtain a phase map. (b) Comparison between the simulated (top) and measured (bottom) temperature map and thermal OPD (for 6 and 12 V). Plot profiles of the temperature (c) and the thermal OPD (d), for applied voltages of 3, 6, 9 and 12 V. The agreement between experimental and calculated data validates the electro-thermo-optical wavefront modelling. Note that the only adjustable parameter here is the value of the constant phase offset which cannot be measured by the wavefront sensor.

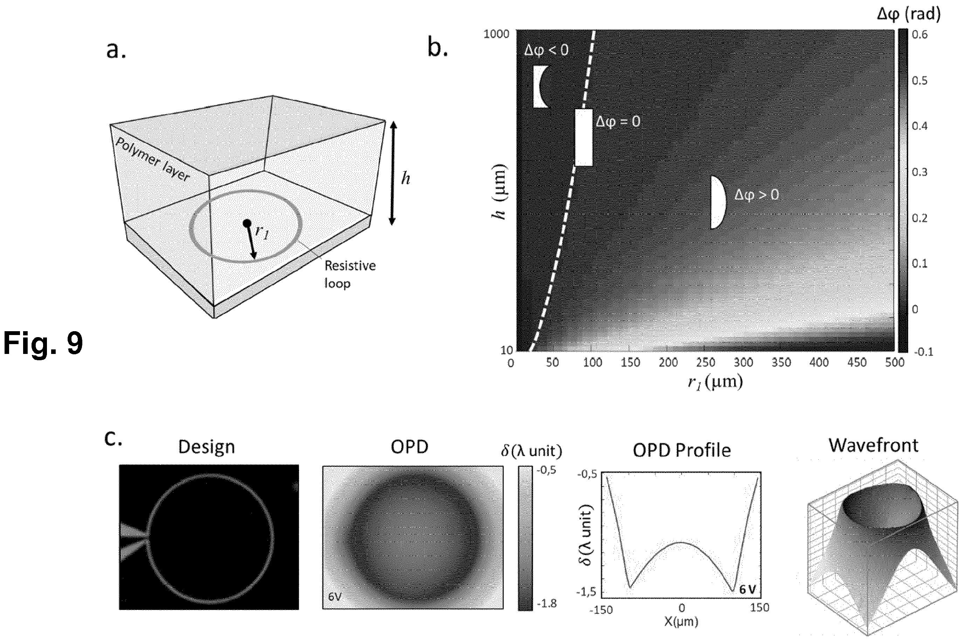

Figure 9 shows an embodiment of a thermally modulated optical device design generated according to the method of the first aspect of the present invention and/or defined according to the second aspect of the present invention, for an embodiment, for generating an output wavefront induced by a single loop. (a) Single-loop SmartLens design. (b) Representation of the spatial phase shift $\Delta\varphi$, (defined as the phase difference between the edge and the centre of the spiral) depending on the loop radius $r_1$ and the PDMS thickness h. Different domains can be distinguished: (i) the dashed line corresponds to a flat phase profile (piston, $\Delta\varphi = 0$). (ii) On the left of the dashed line, for small

loop radii $r_1$, $\Delta\varphi$ is negative and the single loop generates a diverging lens. (iii) Conversely, the single loop acts as a converging lens on the right of the dashed line, for large loop radii $r_1$ and positive $\Delta\varphi$ values. (c) Experimental results for a PDMS thickness $h$ = 150 $\mu$m resulting in a converging lens. Optical reflection image of a single-loop gold heater with radius $r_1$ = 100 $\mu$m, OPD map, OPD profile and 3D representation of the experimental wavefront for an applied voltage of 6 V.

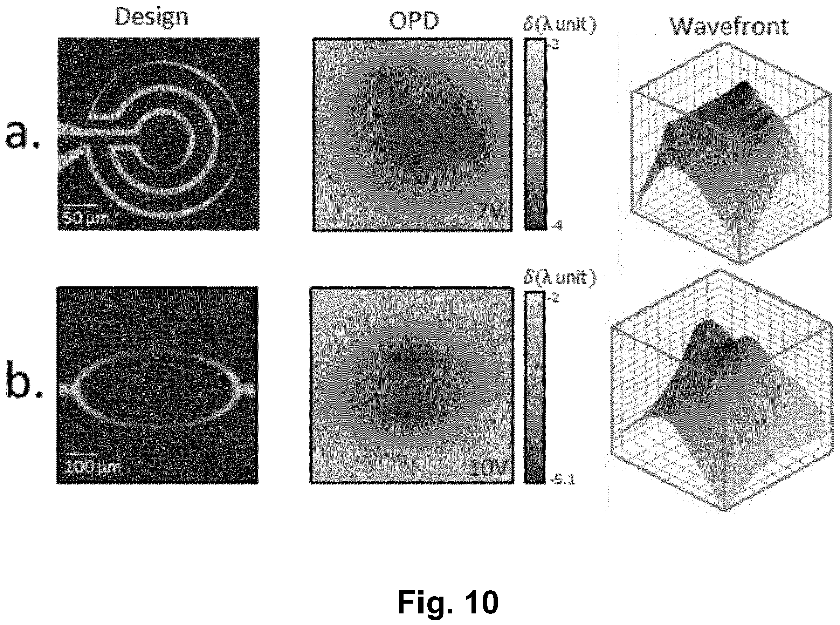

Figure 10 shows the characterization of two gold heaters showing the optical reflection image, OPD map and 3D wavefront representation of the fabricated heater designed/generated according to the method of the first aspect of the present invention and/or defined according to the second aspect of the present invention, for an embodiment. (a) Freeform design with three local reductions of the wire width that induce higher dissipated power and so higher local phase shifts. (b) Design with an elliptical shape and two local reductions of the wire width.

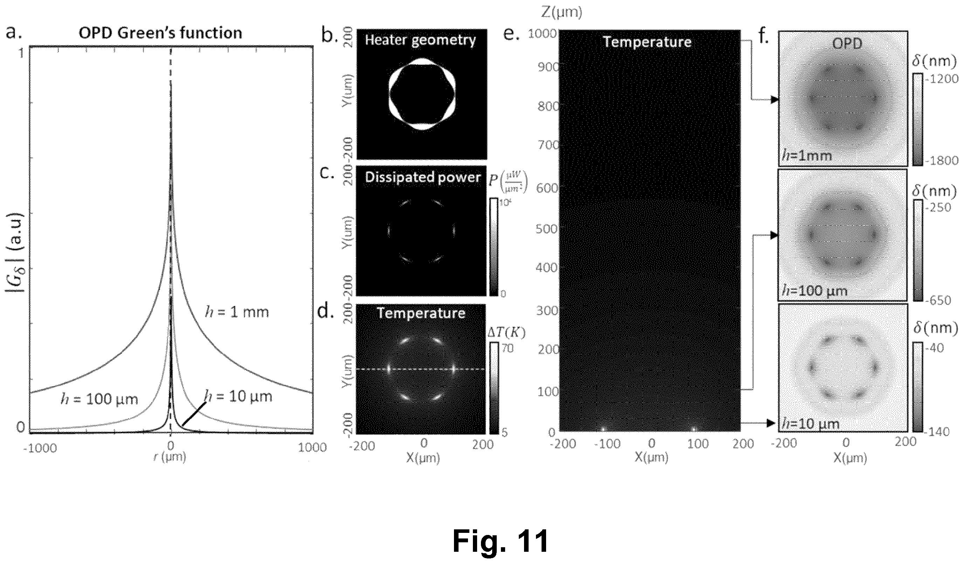

Figure 11 shows the simulated thermo-optical response and PDMS thickness for a thermally modulated optical device design generated according to the method of the first aspect of the present invention and/or defined according to the second aspect of the present invention, for an embodiment. (a) OPD Green's function for various PDMS thicknesses. (b) Heater geometry with several wire constrictions. (c) Dissipated power map (V=3V) and resulting (d) Temperature increase map in the heater plane (XY). (e) cross-section of the temperature increase map in the XZ plane (Y=0). (f) Induced OPD map for different PDMS thicknesses.

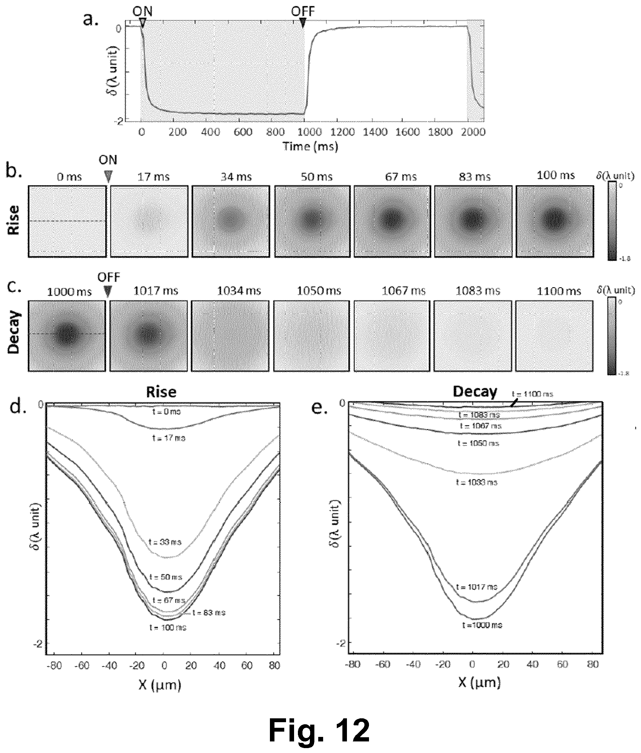

Figure 12 shows the time-dependent wavefront change obtained when a square 0.5 Hz, 0 V-2.5 V modulation is applied on a 50 $\mu$m diameter SmartLens according to the design of Fig. 5(a). (a) Evolution of the amplitude of the wavefront change for a 50 $\mu$m diameter SmartLens. At t = 0, the device is switched on (V = 2.5 V) and switched off at t = 1000 ms. (b) Wavefront images during the transient period when the device is switched on and (c) switched off. (d), (e) Corresponding wavefront profiles (along the red dashed line in (b) and (c)) at different times.

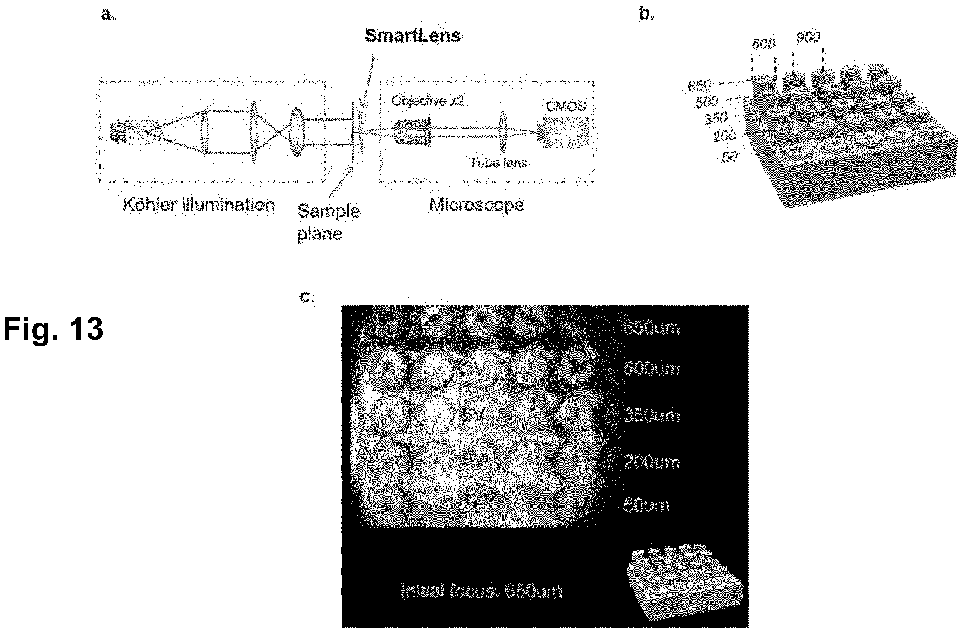

Figure 13 schematically shows the simultaneous multiplane refocusing in microscopy using the SmartLens of the present invention. (a) Microscope setup with Kohler illumination. The 5x5 tuneable microlens array is placed 2 mm above a 3D transparent resin sample which is imaged on a CMOS sensor by a x2 objective and a tube lens. (b) Description of the 3D sample, a 5x5 array of transparent resin with 600 $\mu$m diameter and 900 $\mu$m spacing. The height of the cylinders ranges between 50 $\mu$m and 650 $\mu$m. (c) The microlenses of the array are aligned with the cylinders of the sample. When all the tuneable microlenses of the array are switched off, only the top surfaces of the 650 $\mu$m high cylinders (top row) are in focus. Scanning the voltage applied to each microlens enables to properly bring into focus cylinders located in different planes.

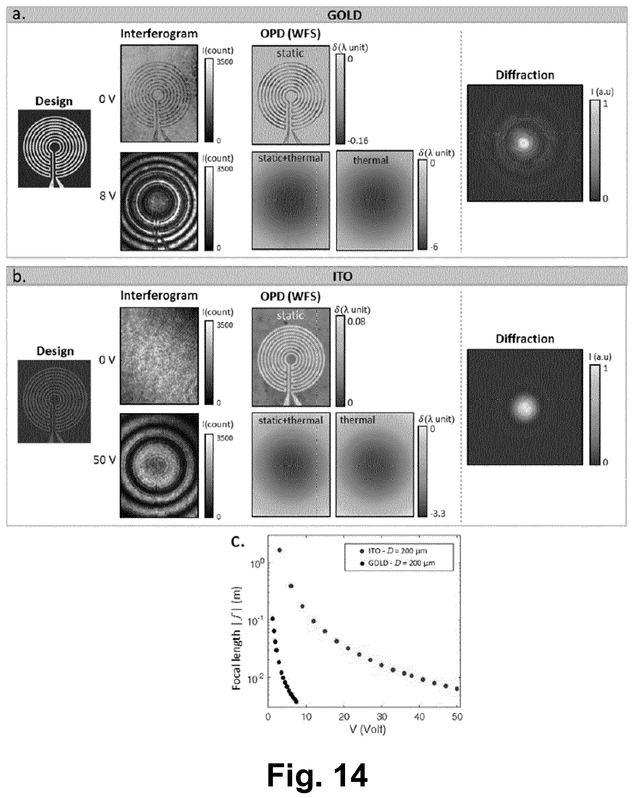

Figure 14 shows a comparison of gold and ITO based SmartLens. An optical reflection image of the fabricated spiral design (200-$\mu$m diameter with 9 evenly-spaced loops) is shown for (a) gold and (b) ITO as well as the corresponding interferograms and OPD maps (measured by wavefront sensing (WFS)) with and without applied voltage. When the device is switched off (0 V), the interferogram is mainly representative of the intensity losses. The static (cold) wavefront distortions can be clearly appreciated on the OPD maps and are in good agreement with the expected refractive index mismatch between the resistor material (gold or ITO) and PDMS. The diffraction patterns of these structures measured at a distance d = 1 cm (right) demonstrate the better performances of ITO. When the device is switched on (V = 8 V for gold, V = 50 V for ITO), the OPD carries both the static and thermal wavefront distortion. Subtracting the static contribution gives access to the true thermal contribution. (c) Evolution of the focal length (in log scale) against applied voltage V for gold and ITO. Note that since ITO and gold have different resistivities, ITO requires higher voltages than gold to obtain the same focal lengths.

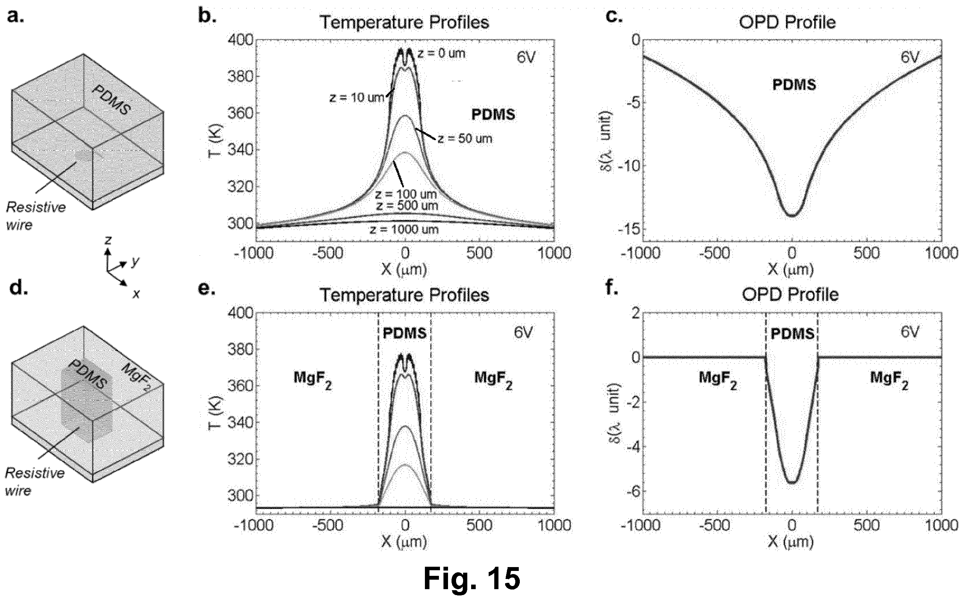

Figure 15 schematically shows the effect of materials with different thermal properties on the heat confinement above a gold heater of diameter D = 200 $\mu$m with the geometry shown in Fig. 5(a). Temperature confinement. Simulated temperature and OPD profiles comparison for a 1 mm PDMS layer deposited all around the heater ((a), (b) and (c)) and for a PDMS column deposited on top of the heater and surrounded by MgF2 ((d), (e) and (f)). A voltage V = 6 V is applied to a 200 $\mu$m diameter gold spiral with 9 evenly-spaced loops.

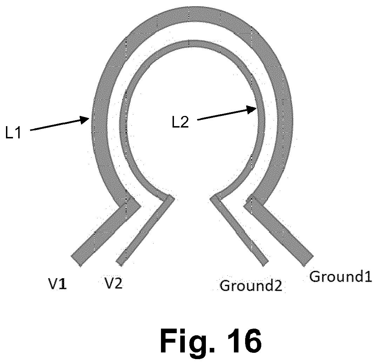

Figure 16 schematically shows an embodiment of the heating element of the device of the third aspect of the present invention, for which the heating element follows a layout pattern including two circumscribed loops formed by two respective strips which are independently stimulable to generate respective independent output wavefront shapes.

## DESCRIPTION OF THE PREFERRED EMBODIMENTS

Figure 1 describes the overall concept of the technology. A theoretical model, coupled to a genetic algorithm, enables to precisely design a resistive microwire (Fig. 1(a)). Following microfabrication (Fig. 1(b)), the device is electrically powered to deliver, through Joule effect, the pre-determined temperature landscape $\Delta T(x,y,z)$ into a thermo-responsive polymer matrix (see Figure 1(c)). Due to the temperature dependence of its refractive index, the polymer experiences a local refractive index modulation (Fig. 1(d)) able to precisely shape the incoming light wavefront with the pre-determined pattern initially fed into the genetic algorithm. To validate the invention approach experimentally, the present inventors designed and characterized several SmartLenses able to create a wide range of wavefront modifications and demonstrated their phase amplitude tuneability. In contrast to LC-SLMs or LC microlenses, the SmartLens is polarization-insensitive since it involves thermally-induced non-birefringent refractive index modulation. As it operates in refractive instead of diffractive regime, it can also be used over a broad wavelength range. Furthermore, unlike deformable mirrors, SmartLens elements can work either in transmission or reflexion modes and do not involve any mechanical movement. Since their fabrication involves a simple process which is compatible with large-scale production, these cost-efficient devices can be scaled-down to micrometer sizes and integrated in a multi-element device (see Fig. 1(b)).

Electro-thermo-optical Model - As already described in a previous section, the method of the first aspect of the present invention comprises combining the iterative algorithm with an electro-thermo-optical model, which is here briefly described.

For a resistor generating a Joule power distribution $P_0$, an efficient way to calculate the induced temperature rise field $\Delta T$ involves a convolution by the thermal Green's function $G_T = \dfrac{1}{4\pi\kappa r}$. Here, $G_T$ corresponds to the steady-state temperature distribution induced by a point-like source of heat in a homogenous medium with thermal conductivity $\kappa$ and:

$$\Delta T = P_0 \otimes G_T$$

As discussed above, this temperature field $\Delta T$ changes the refractive index through the thermo-optic coefficient $dn/dT$. An incoming plane wave passing through the PDMS layer will accumulate an Optical Path Difference (OPD) $\delta$ during its path through the temperature and refractive index fields, which can be obtained in a similar way using the following equation:

$$\delta = P \otimes G_\delta$$

where $G_\delta = \dfrac{[dn/dT]}{4\pi\kappa}$, is the Green's function for the OPD, i.e. the OPD distribution generated by a point-like heat source in a medium of thickness $h$. As illustrated in Fig. 2(a)-(c), this process allows a direct and fast calculation of the wavefront generated by a given resistor through a precise estimation of the dissipated power $P$ which takes into account temperature-dependent resistivity (see Methods below). This entire calculation takes less than 1 s where a Finite Element Method (e.g. COMSOL MULTIPHYSICS) calculation would typically require 1 h.

However, the desired OPD can only be reached by solving the inverse problem. In Fig. 2(d) and in the Methods description below, a genetic algorithm-based method to determine the optimal resistor design leading to a targeted wavefront shape is presented.

Experimental validation of the model - To validate this model, the present inventors designed and fabricated a SmartLens element based on a microfabricated gold wire (see Methods). At this stage, a most simple electrical geometry was chosen: a 200-$\mu$m diameter spiral heater with 9 regularly spaced loops of constant width $w$. This structure was coated with a $h$ = 1 $mm$ PDMS layer, a thermo-responsive polymer chosen for its high transparency in the visible region, its thermal stability at high temperature and because it exhibits relatively large refractive index variations with temperature ($[dn/dT]$ = -4.5.$10^{-4}$ $K^{-1}$). Although the temperature rise (typ. 50 K) used here induces small refractive index changes (typ. $10^{-2}$), beam propagation through hundreds of micrometres of PDMS results in significant OPDs, of the order of several micrometers.

The present inventors experimentally measured the thermal OPD using a shearing interferometry-based wavefront sensor (SID4, Phasics S.A.) under a custom-built microscope (x10, NA = 0.45). The spiral-shaped resistor was illuminated using a $\lambda$ = 542 $nm$ LED, through a Kohler illuminator set at low numerical aperture in order to increase the spatial coherence (see Fig. 80). To extract the thermal contribution to the OPD, the wavefront measured was subtracted while the device was off ($V$ = 0) from the wavefront measured when heating the device ($V \neq 0$). In this way, the static aberrations of the microscope and the SmartLens are both removed (see Fig. 80(b)). Figs. 80(b) and (d) show a spectacular agreement between experimental and simulated OPD maps for different applied voltages, thus validating the proposed electro-thermo-optical wavefront modelling. Interestingly, from the thermal OPD measurement, one can extract the experimental temperature map in the plane of the resistor, with micrometer resolution (see Fig. 80(c) and (d)). This is obtained by (i) deconvoluting the thermal OPD map by the Green's function $G_\delta$ to retrieve the heat power map $P$, and then (ii) convolving this retrieved power map $P$ by the thermal Green function $G_T$. Experimental and simulated temperature maps are in good agreement, and are useful to ensure that the PDMS ceiling temperature ($T$ = 250 °C) is not reached.

Deterministic wavefront control by thermal engineering -To illustrate the possibilities of achieving free-form wavefront dynamic optical systems to create complex optical wavefronts, the present inventors chose to realize a set of three different elementary optical functions: a lens, a phase piston and an axicon lens with tuneable amplitudes. To prove that the concept underlying the present invention can have an even wider reach, and emulate or correct most optical designs, the present inventors also show that non-axisymmetric Zernike polynomials can be generated, including -but not limited to- astigmatism. A broad range of wavefronts should therefore be accessible.

By combining the above electro-thermo-optical modelling with genetic algorithm optimization, the inverse problem can be solved in order to determine the optimal resistor geometry leading to a desired wavefront shape (Fig. 2(d)). Briefly, genetic algorithms are stochastic optimization methods inspired by the laws of natural selection and genetics: at each step, *crossover* and *mutation* (random processes which avert convergence towards local minima) are used to produce populations of electrical designs, from which the best are selected using a merit function. Since most microfabrication processes impose a constant thickness $h_g$ of the wire throughout the chip, here $h_g$ = 50 *nm,* the variables are therefore the number $N$, radii $r_i$, and widths $w(r_i)$ of the resistive wire loops (see Fig. 2(a)). After typically 60 iterations, corresponding to optimization times of the order of 30 min, designs approaching the target wavefronts were obtained (see Methods).

Fig. 3 displays experimental results obtained from a set of resistor designs optimized for 4 different desired wavefronts. In each case, an optical reflection image of the fabricated SmartLens element is shown; along with the corresponding experimental temperature and OPD maps. A comparison between calculated and experimental OPD profiles for different voltages is also provided, as well as a 3D representation of the experimental wavefront.

The design of Fig. 3(a) produces a diverging parabolic lens as confirmed by Zernike decompositions (see Fig 3(e)). Figure 3(b) demonstrates a flat phase piston for this polymer thickness. However, as shown in "Wavefront induced by a single loop" below, with reference to Fig. 9, a thinner polymer can lead the same design to behave as a converging lens. The design of Fig. 3(c) produces a conical wavefront and therefore behaves like an inverted axicon providing a simple way to obtain a tuneable annular beam. The setup described in Fig. 4(b) transmits a Gaussian beam when the device is switched off (0 V), and an annular beam with a voltage-controlled diameter when switched on (see Fig. 4(a)). This implementation has potential applications in several fields, ranging from optical trapping to plasmonics. Used in the configuration of Fig. 4(c), the same device can produce tuneable Bessel-Gaussian beams, which are extensively used in light-sheet microscopy, micro-manipulation, etc. The interferences produced by refocusing the annular beam has geometrical properties driven by the cone angle. As shown in Figs. 4 (d)-(f), this angle increases with the applied voltage, reducing the axial confinement and lateral extension of the beam, thereby providing an electrically-controlled Bessel-Gaussian beam.

Finally, Figures 3(d)-(f) show that astigmatism, or other Zernike modes can be generated: the method is not limited to wavefronts displaying rotational symmetry. More complex freeform shapes can be generated (as shown in "Freeform wavefront shaping" section below) provided that i) no wire exceeding the fabrication resolution is involved, and ii) the targeted wavefront does not contain phase gradients steeper than $\sinh^{-1}(h/r)$ decay of the OPD Green's function, as this would demand negative heat sources (or heat sinks). This condition can be relaxed at the expense of phase range by reducing the PDMS thickness $h$ (see "Thermo-optical response: role of the PDMS thickness" below)

Phase tuneability range and response time - For this study, a simple design was chosen, consisting of regularly-spaced loops of constant width, and fabricated four spirals of different diameters $D$ = 10, 50, 200 and 540 $\mu$m (see Fig. 5(a)), which act as tuneable diverging lenses. The experimental OPD profile can then be approximated and fitted by a parabola

$$\delta = f\left(1 - \frac{x^2}{2f^2}\right)$$

in order to estimate the focal length $f$ (see Fig. 5(b)). Fig. 5(c) shows, for four spiral sizes, the measured focal length (in log scale) depending on the applied voltage $V$ (in Volts). When the SmartLens is off ($V$ = 0 V), the device acts as a plane-parallel plate (infinite focal length). Interestingly, the focal length $|f|$ decreases faster with the applied voltage $V$ for smaller heaters, since the radius of curvature of the generated lens is shorter. For instance, the focal length of the 10 $\mu$m diameter spiral reaches $f$ = -110 $\mu$m for $V$ = 2.1 V which corresponds to a f-number $|f/D|$ = 11. Furthermore, it is noteworthy that the accuracy and precision of the phase, and thus of the focal length, are only limited by the applied voltage accuracy and precision.

To evaluate the response time of the device, a square 0.5 Hz, 0 V-2.5 V modulation was applied. Fig. 5(d) shows the measured optical power $P_{OP}$ = 1/f against time, for $D$ = 50 $\mu$m and $D$ = 200 $\mu$m. From the temporal traces, the rise time (resp. fall time) was extracted by measuring the 10 % to 90 % (resp. 90 % to 10 %) optical power transition time with respect to the steady-state maximum value. Fig. 5(e) represents a semi-log graph of the measured rise times and fall times for each SmartLens diameter $D$. These values are in good agreement with the time scale of the temperature evolution (black dashed line) on a surface with a characteristic size $D$: $\tau = D^2/4a_s$, where $a_s$ is the thermal diffusivity of the substrate ($a_s \approx 3.4.10^{-7}$ $m^2.s^{-1}$ for glass). Among the tested spirals, the smallest ones (10 $\mu$m diameter) enabled fast response times, around 500 $\mu$s.

Broadband spectral operation - Many applications, ranging from microscopy to machine vision, require optical elements able to operate over a broad wavelength range. However, diffractive optical elements, including LC-SLMs, suffer from strong chromatic aberrations due to abrupt phase jumps (0-2$\pi$). In spite of extensive efforts over the last few years, diffractive dispersion still limits their range of applicability, especially for broadband imaging. Here, it is shown that SmartLens devices have low chromaticity, comparable to that of classical glass lenses since the phase is only modified by a smoothly varying refractive index distribution. To demonstrate these broadband properties, the present inventors assessed the longitudinal chromatic aberration of a diverging SmartLens ($D$ = 200 $\mu$m - see Fig. 5(a)). To this aim, the present inventors measured the focal length using the wavefront sensing setup described above, using six LEDs with different colours. Fig. 6(a) shows the wavelength dependence of the measured focal length throughout the visible spectrum, for three different applied voltages (6, 9 and 12 V), showing remarkably constant focal length across the visible spectrum.

In contrast to classical lenses, the chromaticity of a SmartLens does not result from the refractive index dispersion $n(\lambda)$ but essentially derives from the dispersion of the thermo-optic coefficient $[dn/dT](\lambda)$. To characterize the chromatic aberrations of the SmartLens at a given applied voltage, the present inventors introduce the dimensionless parameter $\Delta f/f_0$, where $\Delta f = f(\lambda) - f_0$, stands for the paraxial focal shift related to the focal length $f_0$ (arbitrarily defined near the centre of the visible spectrum, $\lambda_0$ = 542 nm).

Table 1 and "SmartLens chromaticity" below show that for the three applied voltages $\Delta f/f_0$ remains below 2% in the 475-631 nm wavelength range and reaches 5.7% in the violet ($\lambda$ = 390 nm). Also, the chromatic aberrations of a SmartLens are compared to the theoretical aberrations of a model diverging thin plano-concave PDMS lens and conclude that a SmartLens performs similarly to a classical bulk lens ($\Delta f/f_0 \approx$ 1.0% in the 475-631 nm wavelength range).

Simultaneous multiplane imaging using an array of SmartLenses - Finally, the remarkable potential of an array of SmartLenses to achieve broadband multiplane imaging is illustrated herein. In this setting, an array of 5x5 thermal microlenses located close to the image plane of a zoom lens enables the simultaneous refocusing of several coloured objects located at various distances from the imaging system. A schematic description of the optical configuration is shown in Fig. 6(b): a zoom lens (Canon EF-S18-55mm), set to a focal length $f$ = 35 mm, images a scene on a camera (Pixelink PLD755CU-T). A 5x5 tuneable microlenses array ($D$ = 540 $\mu$m, see Fig. 5(b) for geometry details) is located close to the image plane of the lens. The tuneable array is placed 5 mm before the image plane to maximize the refocusing range and minimize the cross-talk between the different microlenses. A telescope (omitted in Fig. 6(b) for clarity) with x1.5 magnification is used to conjugate the image plane on the camera and match the size of the microlens array with that of the sensor. RGB-coloured objects were placed at various distances ($d$ = 20, 30, 40, 50 and 60 cm) from the front of the tuneable system. Each RGB label occupies a different region of the image grid and is imaged through an independent tuneable thermal microlens (see Fig. 6(c)). For a better comparison, the size of the objects was varied linearly with $d$ to compensate for the distance-dependence of the magnification and obtain images of similar size on the detector.

As shown in Figure 6(b), an appropriate voltage can be determined to tune the focal length of the corresponding SmartLens and form a focused image of each object with qualitatively low chromatic aberrations (see quantitative estimation in "SmartLens chromaticity" below). However, a faint halo, attributed to diffraction by the gold heater is observed. Using transparent conductive materials such as Indium Tin Oxide (ITO) strongly reduces this effect as demonstrated in "Comparison of gold and ITO based SmartLens" below. Another important parameter particularly relevant to imaging is transmission loss. While the transmission of the current SmartLens is about 60 % (for a diverging lens-wavefront), values above 90 % are obtained when using highly transparent conductive materials such as ITO and could be further improved using antireflection coatings.

This implementation should find a wide range of applications since it enables different planes of interest to be monitored by simply inserting a SmartLens array, which can be mass-produced at moderate costs, in front of a standard camera. Beyond video surveillance, machine vision, cell phone or camera imaging, the technique has a major potential in microscopy, where the depth of field is extremely limited (see "Simultaneous multiplane imaging in microscopy" below). In biology, imaging fast polychromatic processes occurring in various, non-deterministic (x,y,z) positions is essential. For instance, coupling SmartLenses with widefield fluorescence calcium imaging would enable the simultaneous monitoring of fast transient neuron activities at different depths in the brain, although with limited resolution. Interestingly, the proposed strategy is also compatible with endoscopy or miniaturized microscopy since the tuneable array works in transmission and can be easily designed to reach sub-millimetre dimension. It is finally envisioned that such concept should open new possibilities in all fields where a microlens array is needed, such as spinning disk microscopy, Shack-Hartmann based wavefront-Sensing or Light Field imaging.

The present description illustrates the broad potential of the *SmartLens* concept, i.e. of the present invention, as a flexible building block to be incorporated into a wide range of optical instruments in order to boost their performance. As demonstrated above, a broad range of wavefront shapes and Zernike coefficients can be adapted at will by using a genetic algorithm (or another type of iterative algorithm) to generate complex (free-form) shapes. One of the most interesting application of the technology is adaptive optics aberration correction. For instance, in standard microscopes, one single SmartLens in the pupil of the system could be used to dynamically correct spherical aberrations. Several phase masks, corresponding for instance to different Zernike polynomials, could potentially be multiplexed on the same sample by addressing independently each spiral loop, enabling the dynamic correction of most aberrations. As a proof of concept, the electrical design geometry was restricted to a spiral shape. However, it is worth mentioning that much more complex geometries can be implemented to generate tuneable non-centred phase mask, gratings or even engineered diffuser. Another attractive feature of this technology is the use of independent controllable multi-elements arranged in an array. An array of 5x5 elements has been presented here but scaling up the number of elements in order to compete with or surpass standard deformable mirrors (several tens to hundreds of elements) should be possible. As shown by numerical simulations in "Temperature confinement: simulations" below, thermal confinement strategies are a promising way to mitigate thermal cross-talk between closely packed heaters. Importantly, SmartLens has a quite low power consumption (below 100 mW) which is highly critical for compatibility with integrated devices. Another advantage is its cost-effectiveness as it requires few simple fabrication steps that are compatible with standard microelectronics protocols. Concerning the device lifetime, high phase stability has been observed over dozens of hours of operation, as long as the applied voltage leads to temperature below the PDMS ceiling temperature.

Methods:

Sample Fabrication - The samples were produced in one or two lift-off steps according to the dimensions of the smallest electrode's widths. For dimensions above 2 $\mu$m, the lift-off process consisted in UV photolithography with a negative resist (Microchemicals AZ nLOF 2020) on a sodalime wafer. Subsequently Ti (2 nm) / Au (50 nm) were deposited by e-beam and thermal evaporation respectively. Lift-off was completed by removing the resist with acetone. For dimensions below 2 $\mu$m a complementary lift-off step was used in addition to the previous one, in order to produce the central parts and the smallest electrodes. Objects with critical dimension below 2 um were patterned using this second step. To achieve this resolution, electron beam lithography (EBL) was used. On top of the pre-patterned sample we deposited a double layer of PMMA (Microchem 495 A4 + 950 A2) and conductive polymer to avoid charging (Denko, Espacer 300Z). It was then exposed with a Scanning Electron Microscope (FEI InspectF) modified to perform lithography (Raith Elphy plus). The deposition and lift-off processes were identical to those of the first step. Finally, the whole samples were covered with 1 mm of PDMS (Sylgard 184) and a 170 $\mu$m thick glass coverslip.

Electro-thermo-optical model - In the following, a simple electro-thermo-optical model will be described, to calculate the wavefront shape induced by a given resistor geometry. To this end, the local resistivity, power dissipation, temperature gradient, and refractive index gradient have to be determined. At this stage, a spiral geometry (see Figs. 1(a) and (b)) is considered, which is modelled by an assembly of $N$ circular wire-loops (electrical feeds are omitted here, see Figure 2(a)).

For the here described model, a circular loop $i$ of radius $r_i$ is considered. For the sake of clarity, a system with circular geometry is assumed. Note, however, that the azimuth $\theta$ can be taken into account when generating geometries without axial symmetry, as shown later. The electrical resistance of an infinitesimal wire segment of length $dl = r_i d\theta$ reads:

$$dR(r_i, T) = \frac{\rho(T).dl}{w(r_i).h_g} \qquad [1]$$

where $h_g$ stands for the wire thickness, $w(r_i)$ the wire width and $p(T)$ the electrical resistivity. The flow of an electric current $I$ through the wire segment locally induces, by Joule effect, a dissipated heat power $dP(r_i, T) = dR(r_i, T).I^2$. For most metals, resistivity increases with temperature, which can be simply described using a linear approximation, $\rho(T) = \rho_0(1 + \alpha\Delta T)$, where $\alpha$ is the temperature coefficient of the resistivity and $\rho_0$ is the resistivity at room temperature To. By combining the expressions of $dP(r_i, T)$ and $p(T)$ with Eq.1, the temperature dependence of the Joule power for this small wire segment is obtained:

$$dP(r_i) = dP_0(r_i)(1 + \alpha\Delta T) \qquad [2]$$

Where $dP_0(r_i) = \frac{\rho(T_0).dl}{w(r_i).h_g}.I^2,$ is the Joule power dissipated when the resistor is at room temperature $T_0$. From this expression, $P_0$ can be calculated considering an arbitrary number of loops $N$ with $r_i$ the radius and $w(r_i)$ the width of the $i^{th}$ loop (see Figure 2(a)). As discussed above, the temperature map $\Delta T$ can then be calculated through a simple convolution:

$$\Delta T = P_0 \otimes G_T \qquad [3]$$

However, as shown by Eq. 2, the steady-state deposited power $P$ depends on the local temperature rise $\Delta T$ (through the thermal dependence of the resistivity), and the problem is clearly recursive. For better precision, the temperature map $\Delta T$, can be used to calculate a more precise Joule power map $P$ using Eq.2 to account for the temperature dependence of the resistivity. Using equations 2 and 3, this process can be repeated as many times as necessary to converge iteratively towards a more accurate estimation of $\Delta T$ and $P$ (see Fig. 7). Fig. 2(b) shows the temperature rise $\Delta T$ obtained using this process.

As light passes through this medium, the temperature field $\Delta T$ changes the refractive index through the thermo-optical coefficient. , inducing an Optical Path Difference (OPD) $\delta$ which can be obtained using the following equation:

$$\delta = P \otimes G_\delta$$

where $G_\delta = \frac{[dn/dT]}{4\pi\kappa} \cdot sinh^{-1}(h/r),$ is the Green's function for the OPD.

<u>Genetic algorithm</u> optimization- Genetic algorithm optimization was implemented using the ga function provided in the MATLAB Global Optimization Toolbox (2016b). For each design optimization, a dedicated fitness function was defined to estimate, at each step, the agreement between the desired wavefront and the wavefront generated by a given electrical design. The wavefront was calculated by means of the electro-thermo-optical model (see Fig. 2a), by considering the gold resistivity $\rho_0 = 3.1 \cdot 10^{-8}\Omega.m$ at room temperature ($T_0 = 293$ $K$), the temperature coefficient of the gold resistivity $\alpha = 3.4 \cdot 10^{-3}K^{-1}$ and the temperature coefficient of the PDMS refractive index $[dn/dT] = -4.5 \cdot 10^{-4}K^{-1}$. The procedure starts with the creation of a random initial population ($n$ = 1000) of design using as variable the number $N$, radii $r_i$, and widths $w(r_i)$ of the resistive loops as well as an anisotropy variable $A_i$ in the case of profiles lacking rotational symmetry (e.g. astigmatism). For practical reasons (position of the electrical contacts), only odd values of the number of loops were considered: $N$ = 1, 3, 5, 7, 9, 11, 13. As a first step, the algorithm estimated, *via* the fitness function, the merit of each design to determine an optimal number $N$ of loops which was then fixed in the rest of the optimization procedure (to enable *crossover* between different designs). At each generation (or iteration), the algorithm ranks and selects the 10 best designs and uses them as parents to produce a new population with 200 children designs via crossover and mutation (constraint dependent). In the overall procedure, linear inequalities constraints as well as lower and upper bounds were added on the radii $r_i$, and widths $w(r_i)$ of the loops to (i) avoid loops superimposition, (ii) define the microlens size ($r_N$ = 100 $\mu m$) and (iii) only consider realistic designs regarding the fabrication methods ($w > 0.5$ $\mu m$ ). The voltage was arbitrarily fixed to 6 V. At each generation, fitness calculations were performed in parallel using the MATLAB Parallel Computing Toolbox of on 20 threads (Intel(R) Xeon(R) CPU E5-2630 v4 2.2GHz - RAM: 64Gb). Optimization convergence (fitness average change below $10^{-6}$) was typically obtained after 60 generations.

<u>Wavefront engineering</u> - Genetic algorithm optimization enables the engineering of the wavefront to target a given Zernike polynomial. Zernike polynomials $Z_n^m$, where $n$ stands for the radial degree and m the azimuthal degree, are a set of orthonormal functions which are widely used in controlling and characterising the aberrations of optical systems. Figure 3(a) shows a resistor designed to maximise the absolute value of the defocus aberration $Z_2^0$ over other Zernike aberrations. Here, the design was optimized within a 220 $\mu m$ diameter pupil (dashed line on the OPD map). A Zernike decomposition of the measured OPD on the first fifteen Zernike modes demonstrates, as expected, a clear predominance of the defocus mode $Z_2^0$ (see Figure 3(e)). The residual RMS value of other Zernike modes is remarkably low, and mainly due to numerical errors associated with pupil centring for modal projection. Moreover, it is worth mentioning that the negative value of the $Z_2^0$ coefficient describes a diverging parabolic lens. This is consistent with a higher temperature at the centre and a negative value of *dn/dT* for PDMS (see Figure 3(a)).

Figure 3(b) shows the design of a "flat" OPD profile, which corresponds to a phase piston. For any pupil radius $r_1$ smaller than the PDMS thickness $h$, the optimal design is actually a single loop, as illustrated here for a radius $r_1$ = 100 $\mu$m. Note that if $h$ were decreased (or $r_1$ increased), the same single-loop design would result in a converging lens profile (see "Wavefront induced by a single loop" below). Here, interestingly, the OPD profiles remain flat for the different applied voltages and can reach values greater than 12 $\lambda$. This is a 4-fold improvement as compared to LC-SLM working in reflection, which typically provides a phase modulation range of 3 A at $\lambda$ = 550 nm. Figure 3(c) shows the results corresponding to a design optimized to provide a conical wavefront surface $\delta(r) = -\sqrt{r^2/\tan^2\gamma},$ where $\gamma$ is the apex angle. Again, the amplitude of the conical deformation is controlled by the applied voltage. Such a tuneable negative axicon is interesting in applications where the dynamic control of Bessel beams is crucial, e.g. in light sheet microscopy.

Finally, Figure 3(d) shows that this method is not limited to wavefronts displaying rotational symmetry. More elaborate freeform wavefronts can be created by engineering the spiral wire width not only radially ($w(r_i)$) but also angularly ($w(r_i,\theta)$). Figure 3(d) represents a SmartLens element designed to generate vertical astigmatism $Z_2^2 = R_2^2\cos(2\theta)$ in a 160 $\mu$m diameter pupil. In this case, we fixed the angular periodicity of the wire widths to match the azimuthal degree of the considered Zernike polynomial ($m = 2$) and introduced an anisotropy variable $A_i$ in the fitness function for each wire width: $w(r_i,\theta) = w(r_i)(1 + A_i\cos(m\theta))$. As expected, within the chosen 160 $\mu$m diameter pupil, the Zernike decomposition of the measured OPD clearly demonstrates a predominant vertical astigmatism coefficient $Z_2^2$ (see Figure 3(f)), although a moderate residual amount of defocusing $(Z_2^0)$ is also present. The essential limitation here is the minimum achievable wire width, which is imposed by our current lithography process. Improving resolution to 150 nm or below, or using a larger thermal engineering surface should enable a strong reduction of this effect.

Wavefront induced by a single loop:

As shown in figure 9(b), the same single loop resistor design can have different effects on the wavefront depending on the thickness of the polymer. As experimentally shown in Fig. 3(b), a $r_1 = 100$ $\mu$m radius loop can produce a flat phase profile if topped by a 1 mm thick PDMS layer (corresponding to the dashed curve in Fig. 9(b)). Topped with a thinner polymer layer (on the right of the dashed line), it will induce a converging lens, as experimentally demonstrated in Fig. 9(c) for *h = 150 $\mu$m (*$r_1$ = 100 $\mu$m). Conversely, a diverging lens can be obtained using smaller radius $r_1$ (on the left of the dashed line).

Freeform wavefront shaping:

According to the ISO standard 17450-1:2011, Freeform optics involve optical designs with a freeform surface, which has no translational or rotational symmetry about axes normal to the mean plane. Here, the present inventors present planar freeform designs that can generate freeform wavefront shapes according to the present invention, in the same way as freeform optics do. The extra feature of the present invention can bring here is the tuneability of the wavefront shape, which is not possible with conventional static freeform optics. Fig. 10 shows how the present inventors have fabricated and characterized two gold heaters by creating local constrictions on the wire width to produce more heat and higher local phase shift. In Fig. 10(a), the geometry of the heater doesn't display any translational or rotational symmetry, thus producing a so-called freeform wavefront. In Fig. 10(b), the shape of the heater is no more circular but rather elliptic leading to a wavefront with no rotational symmetry.

Thermo-optical response: role of the PDMS thickness:

The impact of PDMS thickness *h* on the calculated Thermo-optical response is discussed therein. An incoming plane wave passing through the PDMS layer accumulates an OPD $\delta$, which can be obtained by convolving the dissipated power map with the OPD Green's function ($\delta = P \otimes G_\delta$). Figure 11(a) shows the OPD Green's function profile $G_\delta = \frac{[dn/dT]}{4\pi\kappa} \cdot \sinh^{-1}\left(h/r\right)$, i.e. the OPD distribution generated by a point-like heat source in a medium of thickness *h*, for different PDMS thicknesses. It can be observed that when reducing the PDMS layer, the lateral gradient of the OPD Green's function increases. Steep OPD gradients are important in order to access high order Zernike polynomials or to generate freeform wavefronts with high spatial frequencies.

To illustrate this point, a heater geometry with several wire constrictions (see Fig. 11b) leading to several hot spots (see dissipated power map on Fig. 11(c) and Temperature map on Fig. 11(d)) has been considered. Figure 11(e) represents the cross-section of the temperature increase map in the XZ plane (along the dashed line Fig. 11(d)). An incoming plane wave passing through the PDMS layer will then accumulate an Optical Path Difference

$$OPD(x,y) \approx \int_0^h \Delta n(\text{T}).dz \approx [dn/dT]\int_0^h \Delta T(x,y,z).dz.$$

Figure 11(f) shows the induced OPD maps for different PDMS thicknesses. As expected, it can be observed that for thinner PDMS layers, the OPD maps exhibit a reduced contribution from low spatial frequencies, but also a reduced phase range.

Time-dependent behaviour:

Information related to time-dependent wavefront changes when a square 0.5 Hz, 0 V-2.5 V modulation is applied on a 50 μm diameter SmartLens (design Fig. 5(a)) is provided herein. Figure 12(a) shows the evolution of the wavefront amplitude with time. We also provide wavefront images and profiles corresponding to the transient period where the device is switched on (see Fig. 12(b) and (d)) and switched off (see Fig. 12(c) and (e)).

The present inventors also checked that when the steady state is reached the wavefront shape remains stable over dozens of hours of operation, indicating that the temperature gradient and average temperature of the whole device are stable. This is in good agreement with the low dissipated power and small size of the heater (50 μm) in comparison to the large area of the available exchange surface (5x5 mm).

Note that the chronograms shown in Fig. 5(d) represents the optical power, which is most relevant in lens applications. The kinetics of optical power are not strictly identical to those of the Optical Path Difference $\delta$ represented here and, as such, should not be directly compared.

SmartLens chromaticity:

To evaluate the chromaticity induced by the thermal lenses, the wavelength dependence of a $D$ = 200 μm SmartLens has been measured using the wavefront sensing setup described in Fig. 8a, using six LED sources ($\lambda$ = 390, 475, 513, 542, 575 and 631 nm), as shown in Fig. 6a. The nominal focal lengths $f_0(V) = f(V,\lambda_0)$ were defined as the values measured for a voltage $V$ at a wavelength $\lambda_0$ = 542 $nm$ (the wavelength used in most of the experiments presented here): $f_0(6\ V)$ = -4.79 $mm$, $f_0(9\ V)$ = -2.72 $mm$, $f_0(12\ V)$ = -1.90 $mm$. The focal lengths $f(V,\lambda)$ were then measured for each of these voltages, and for each of the six LED wavelengths. The relative variation percentages $\Delta f/f_0(V,\lambda)$ = [$f(V,\lambda)$ - $f_0(V)$]/$f_0(V)$ are shown in Table 1 (same data as Fig. 6a).

In order to compare the chromaticity of SmartLenses to that of classical thin lenses (i.e. without thermal processes) three diverging plano-concave PDMS thin lenses were defined with curvatures calculated using the lens-maker's equation to provide focal lengths $f_0(6\ V)$, $f_0(9\ V)$ and $f_0(12\ V)$ equivalent to those of SmartLenses. The focal lengths $f(\lambda)$ of these PDMS plano-concave lenses were then calculated at $\lambda \neq \lambda_0$ using the wavelength-dependent index of PDMS as measured by Z. Cai et al. (A new fabrication method for all-PDMS waveguides. Sensors Actuators, A Phys. 204, 44-47 (2013)) for a PDMS mixing ratio of 10-parts base elastomer and 1-part curing agent at room temperature. The values of $\Delta f/f_0(\lambda)$ = [$f(\lambda)$ - $f_0$]/$f_0$ (independent of the applied voltage $V$), are shown in Table 1, column 2. It is important to note that, for a given wavelength $\lambda \neq \lambda_0$, the theoretical value of $\Delta f/f_0(\lambda)$ only depends on the PDMS refractive index values at $\lambda_0$ and $\lambda$. Indeed, the following relationship is obtained:

$$\frac{\Delta f}{f_0}(\lambda) = \frac{n_{PDMS}(\lambda_0) - n_{PDMS}(\lambda)}{n_{PDMS}(\lambda) - 1}$$

As can be seen in Table 1 below, the relative variations of the focal length of SmartLenses are low (a few percent or below) over the visible spectrum, and the chromaticity level is comparable to that of a classical lens: SmartLenses are indeed relatively achromatic devices.

Table 1 - Focal length variations $\Delta f/f_0(V,\lambda)$, in percent, across the visible spectrum for a classical PDMS diverging thin plano-concave lens (column 2) and a SmartLens biased at 3 different voltages. The nominal wavelength is fixed at $\lambda_0$ = 542 $nm$.

| Wavelength (nm) | $\Delta f/f_0$-Model Plano-concave lens (%) | $\Delta f/f_0$ - Smartlens, EXPERIMENT (%) | | |
|---|---|---|---|---|
| | | 6 V | 9 V | 12 V |
| 390 | -3.03 | -4.27 | -4.73 | -5.40 |
| 475 | -1.01 | 0.39 | 1.54 | 2.12 |
| 513 | -0.39 | 0.08 | 0.00 | 0.17 |
| 542 | 0.00 | 0.00 | 0.00 | 0.00 |
| 575 | 0.37 | -0.01 | -0.17 | 0.02 |
| 631 | 0.86 | -1.32 | -0.62 | -0.79 |

Simultaneous multiplane imaging in microscopy:

For this application, the present inventors designed and fabricated a microscopic 3D object consisting in a transparent resin sample made of an array of cylinders with height ranging from 50 to 650 $\mu$m, base diameter of 600 $\mu$m and separation distance of 900 $\mu$m (see Fig. 13(b)). The sample was imaged through a 5x5 tuneable microlens array (D = 540 $\mu$m - see Fig. 5(a)), placed 2 mm above the sample, a x2 microscope objective, and a tube lens on a CMOS sensor (see Fig. 13(a)). With such magnification, the size of the microlenses array matches that of the image sensor. When all the tuneable microlenses in the array are switched off, only the top surfaces of the 650 $\mu$m high cylinders are in focus, while shorter cylinders are outside of the depth of field. By changing the voltage (and so the focal length) applied to each microlens (0 - 12 V), the top surfaces of the cylinders located in different planes can be brought into focus, as shown in Fig. 13(c).

Comparison of gold- and ITO-based SmartLenses:

In order to evaluate the performances of ITO (Indium Tin Oxide)-based devices, the present inventors fabricated and characterized several ITO heaters (thickness $h_g$ = 50 nm, deposited by sputtering and then baked 30 min at 300 °C), and compared their performances to those of gold heaters with identical geometries (see below Fig. 14(a) and (b)).
First, the ITO transmission was measured, and concluded that, for the chosen geometry (9 loops, 200 $\mu$m diameter), ITO-based designs provide 90% transmission (as compared to 60% for gold) at A = 532 nm. The present inventors then measured the wavefront distortion (referred to as "static" below) introduced by a cold structure using a transmission microscope-based interferometer and by wavefront sensing (see Fig. 14(a) and (b)). For gold, it was found an Optical Path Difference (OPD) $\delta_G \approx$ -0.10 $\lambda \approx$ -53 nm (Peak to Valley) while for ITO it was obtained $\delta_{ITO}$ = 0.04 $\lambda$ = 21 nm. These values are in good agreement with the predicted wavefront distortion induced by a refractive index mismatch between the material heater and PDMS:

$$\delta_G = (n_{Gold} - n_{PDMS}). \ h_g \approx -42 \ nm \approx -0.08 \ \lambda$$

$$\delta_{ITO} = (n_{ITO} - n_{PDMS}). \ h_g \approx 24 \ nm \approx 0.045 \ \lambda$$

Where $h_g$ stands for the thickness of the gold and ITO layer ($h_g$ = 50 nm), and $n_{Gold}$ = 0.55, $n_{ITO}$ = 1.88, and $n_{PDMS}$ = 1.4 stand respectively for the real parts of the refractive indices of gold, ITO and PDMS at A = 532 nm.
While for gold the heater essentially acts as a (square-wave) transmittance grating due to the high reflectance of the gold wires, and leads to significant diffraction (see Fig. 14(a)), ITO heaters can be considered, in first approximation, as a (square-wave) phase grating with a phase amplitude modulation $\Delta\phi = 2\pi \ \delta_{ITO}/\lambda$. For such a grating, diffraction over m orders with an efficiency DE yields an overall diffracted intensity $\sum_{m\neq0}DE = sin^2(\Delta\phi)$ = 6 % (see Fig. 14(b)).
It is worth mentioning that in most experiments presented in this document (Figs. 3, 4 and 5), parasitic diffraction effects are not detectable since the low NA of the imaging systems filter them out. The effects of spurious diffraction are only visible in Fig. 6, when the SmartLens is located close to the detector.
For comparison, such performances associated to a maximum roughness $\delta_{ITO} \approx \lambda/22$ are already interesting in the context of cost-effective optics. Dividing the ITO thickness by a factor of 2 (therefore $\delta_{ITO}$ = 12 nm $\approx \lambda/44$) is technologically realistic and would reduce spurious diffraction/scattering to 1.5%, which sustains comparison with high-end optics.
The present inventors finally demonstrated that an ITO heater can induce a significant thermal phase-shift (see Fig. 14(b)) and already provides a significant dynamic range of focal lengths [-∞ -60 mm] for applied voltages varying between 0 and 50 V (see Fig. 14(c)). Note that ITO has a higher resistivity ($\rho_{ITO}$ = 4.5. $10^{-6}$ $\Omega$. m) as compared to gold ($\rho_{Gold}$ = 3.1. $10^{-8}\Omega$. m). In order to dissipate the same power and therefore generate the same focal length change, the voltage applied to an ITO heater has to be multiplied by a factor $\sqrt{\sqrt{\rho_{ITO} / \rho_{Gold}}} \approx 12.$
These results show that ITO can clearly offer better performances than gold in terms of wavefront distortion and absorption losses, though at the price of an increased fabrication complexity as well as higher drive voltages. An implementation with higher-grade, lower ITO resistivity would reduce these voltages, making them compatible with a compact and portable device.

Temperature confinement: simulations:

The effect of materials with different thermal properties on the heat confinement above a gold heater of diameter D = 200 $\mu$m (see Fig. 5(a) for details on the heater geometry) is studied herein. To this aim, the present inventors numerically compare resistors with two different environments: homogeneous PDMS, or a PDMS region surrounded by another material (see Fig. 15). The performed finite elements calculation results (COMSOL) show that a good thermal conductor enables the device to contain all of the heat and thermo-optic effects within the areas located above the heater, leading to a sharp drop in temperature and OPD at the interfaces with the polymer. Among commercially available materials, magnesium fluoride transparent glass ($MgF_2$ hereafter) was identified as a good candidate. $MgF_2$ has a high thermal conductivity, low thermo-optic coefficient, and a refractive index which reasonably matches that of PDMS. Table 2 below show the parameters of interest for the PDMS and Magnesium fluoride used in the simulations.

Table 2: Parameters of interest for PDMS and $MgF_2$

| Parameters | Material | |
|---|---|---|
| | PDMS | Magnesium fluoride |
| Thermal conductivity $\kappa$ (W.m$^{-1}$.K$^{-1}$) | 0.27 | 27.3 |
| Thermo-optic coefficient dn/dT (K$^{-1}$) | $-4.5.10^{-4}$ | $1.7.10^{-6}$ |

Simulation results show that OPD changes are sharply confined to the vicinity of the resistor when PDMS is surrounded by $MgF_2$, essentially due to two effects: i) a steep temperature decrease at the PDMS/$MgF_2$ boundary (Fig. 15(e)) due to the thermal properties contrast ($MgF_2$ is 100 times more conductive than PDMS) and ii) a low thermo-optic coefficient, which further reduces OPD changes in $MgF_2$. In presence of refractive index mismatch, phase jumps can be observed at the boundaries between the two materials. However, the refractive index of PDMS could possibly be tuned (e.g. by changing the composition) in order to match the refractive index of the surrounding material and reduce diffraction effects on the edges (see Fig. 15(f)). For specific applications, it could be interesting to add a mask (transparent on top of the heaters, opaque in between) in order to properly define a pupil.

Furthermore, it is worth mentioning that, as the presence of heat sinks affects the wavefront profile, the optimization procedure needs to be updated with a Green's function that takes into account such boundary conditions, as explained in a previous section of the present document, and defined in the attached claims.

Finally, Fig. 16 schematically shows an embodiment of the heating element of the device of the third aspect of the present invention, for which the heating element follows a layout pattern including two circumscribed loops formed by two respective strips L1, L2 which are independently stimulable by corresponding stimuli, stimulus sources, to generate respective independent output wavefront shapes. For the illustrated embodiment, the strips L1, L2 are electrically resistive strips, so that the stimuli are respective voltages V1, V2 applied at one end of each strip L1, L2, while the other end is electrically connected to ground (Ground 1 for L1, Ground 2 for L2)

A person skilled in the art could introduce changes and modifications in the embodiments described without departing from the scope of the invention as it is defined in the attached claims.

**Claims**

1. A computer-implemented method of generating an optimized design of a thermally modulated optical device, wherein the thermally modulated optical device comprises:

   - a heating element, which is configured to generate heat induced by a stimulus;
   - a thermo-optical member, made of a thermo-optical material, in thermal contact with said heating element, to receive heat transferred thereby, wherein the at least one thermo-optical material has an optical refractive index profile that is temperature dependent; and
   - a controllable stimulus source configured and arranged to apply at least said stimulus to the heating element so that heat is transferred therefrom to the thermo-optical member to locally modify its optical refractive index profile so that, when traversed by an incoming plane light wave, a specific spatial phase profile $\Delta\varphi$ or output wavefront shape is generated;

   wherein the method comprises:

- requesting a target output wavefront shape to be obtained with the thermo-optical member when traversed by said incoming plane light wave; and
- generating said optimized design for at least said heating element, including an optimized layout pattern, for generating said target output wavefront shape, by determining the same from calculus performed by an iterative algorithm on adjustable variable parameters associated to an initial geometry of a heating element, including at least dimensional parameters.

2. The method of claim 1, comprising generating said optimized design also for the thermo-optical member, including an optimized thickness, for generating said target output wavefront shape, by determining the same from said calculus performed by an iterative algorithm also on adjustable variable parameters associated to an initial geometry of a thermo-optical member.

3. The method of claim 1 or 2, comprising randomly generating said adjustable variable parameters.

4. The method according to claim 1, 2 or 3, wherein said initial geometry of a heating element comprises a layout pattern with $N$ circumscribed wire loops having a wire thickness $h_g$, a wire width $w(r_i, \theta)$, and a radius $r_i$, when the wire loops are circular, or half-transverse dimension $r_i$, when the wire loops are non-circular, wherein $\theta$ refers to the angular position along the wire loop, wherein $N$, $h_g$, $w(r_i, \theta)$, and $r_i$, are said adjustable variable parameters.

5. The method according to claim 4, wherein said adjustable variable parameters further include at least one of:

   - an anisotropy variable parameter $A_i$;
   - the thickness h of the thermo-optical member;
   - the pupil size; and
   - boundary condition parameters regarding the boundaries of the thermo-optical member or of portions thereof.

6. The method according to any of the previous claims, wherein said iterative algorithm is an evolutionary algorithm.

7. The method according to any of the previous claims, comprising, in order to generate said optimized design, combining said iterative algorithm with a stimulus-thermo-optical model for at least heating element geometries including said initial geometry and geometries derived therefrom, wherein said stimulus-thermo-optical model relates each heating element geometry with a respective output wavefront shape, through:

   - a respective structured Joule power map $P$ induced when said stimulus is applied to the heating element; and
   - a thermally induced Optical Path Difference (OPD) $\delta$ accumulated by an incoming plane light wave passing through the thermo-optical member, wherein said OPD $\delta$ is calculated by a convolution with said respective structured Joule power map $P$ by means of a Green's function $G_\delta$.

8. The method according to claim 7, wherein said generation of said optimized design comprises said iterative algorithm solving an inverse problem departing from a target OPD $\delta$ associated to said target output wavefront shape to obtain a respective target structured Joule power map $P_0$, and the optimized design of at least the associated heating element, including adjusted parameters associated to an optimized geometry.

9. The method according to claim 8 when depending on claim 6, comprising said genetic algorithm:

   a) investigating the performances of a first generation population of designs of at least heating elements through a merit function defined to optimize agreement with the target output wavefront shape,
   b) selecting the best designs from said population and using them as parents to produce, via crossover, more optimized designs for a second generation population, and also applying a random process with low probability, mutation, on a chosen set that includes said adjustable variable parameters, to avoid convergence toward local minima, and
   c) performing a further sequence of steps a) and b) on said second generation population, to obtain a third generation population, and so on for a plurality of iterations of said sequence of steps a) and b) for further subsequent generation populations until an error between the target output wavefront shape and the one obtained with the obtained design is less than a predetermined value or until a given number of iterations is achieved, to obtain the optimized design of at least the heating element for the target output wavefront shape.

10. The method according to any of the previous claims, wherein said target output wavefront shape corresponds to an elementary Zernike polynomial function $Z_n^m$, where $n$ stands for the radial degree and $m$ for the azimuthal degree.

11. A thermally modulated optical device, comprising:

    - a heating element configured to generate heat induced by a stimulus;
    - a thermo-optical member, made of a thermo-optical material, in thermal contact with said heating element, to receive heat transferred thereby, wherein the at least one thermo-optical material has an optical refractive index profile that is temperature dependent; and
    - at least one stimulus source configured and arranged to apply at least said stimulus to the heating element so that heat is transferred therefrom to the thermo-optical member to locally modify its optical refractive index profile so that, when traversed by an incoming plane light wave, a specific spatial phase profile $\Delta\varphi$ or output wavefront shape is generated;

wherein said heating element is arranged on said thermo-optical member following a layout pattern including at least one loop;
**characterised in that** said at least one loop is a single loop, and wherein at least the radius $r_1$, when the single loop is circular, or half-transverse dimension $r_1$, when the single loop is non-circular, of the single loop, and the thickness h of the thermo-optical member, are selected to generate an output wavefront shape or desired spatial phase shift $\Delta\varphi$, providing one of a flat phase profile, $\Delta\varphi = 0$, a converging phase profile, $\Delta\varphi > 0$, and a diverging phase profile, $\Delta\varphi < 0$.

12. A thermally modulated optical device, comprising:

    - a heating element configured to generate heat induced by a stimulus;
    - a thermo-optical member, made of a thermo-optical material, in thermal contact with said heating element, to receive heat transferred thereby, wherein the at least one thermo-optical material has an optical refractive index profile that is temperature dependent; and
    - at least one stimulus source configured and arranged to apply at least said stimulus to the heating element so that heat is transferred therefrom to the thermo-optical member to locally modify its optical refractive index profile so that, when traversed by an incoming plane light wave, a specific spatial phase profile $\Delta\varphi$ or output wavefront shape is generated;

wherein said heating element is arranged on said thermo-optical member following a layout pattern including at least one loop;
**characterised in that** said layout pattern has a geometry including two or more circumscribed loops formed by one or more strips of the heating element, wherein the width of each of said one or more strips varies at least radially for different loops of said two or more loops.

13. The device according to claim 12, wherein the width w of said strip within each loop follows the following equation: $w(r_i, \theta) = w(r_i)(1 + A_i cos(m\theta)$, where $r_i$ stands for the radius of the loop, when the loop is circular, or half-transverse dimension, when the loop is non-circular, $\theta$ refers to the angular position along the loop, $A_i$ is an anisotropy variable, to generate an output wavefront shape corresponding to a Zernike polynomial function $Z_n^m$, where $n$ stands for the radial degree, $m$ for the azimuthal degree, and wherein the width of each of said one or more strips:

    - is maintained constant within each loop, to generate an output wavefront shape corresponding to said Zernike polynomial function $Z_n^m$ for m = 0; or
    - varies also angularly along at least one of said two or more loops, to generate an output wavefront shape corresponding to said Zernike polynomial function $Z_n^m$ for m ≠ 0.

14. The device according to claim 12, wherein said one or more strips of the heating element are at least two strips independently stimulable by said at least one stimulus source, to generate respective independent output wavefront shapes.

**15.** The device according to any of claims 11 to 14, wherein:

- said heating element is an electrically resistive element, said stimulus source is a controllable electrical source, and said stimulus is an electrical signal; or
- said heating element is a photo-absorbing element, said stimulus source is a spatially controllable light source, and said stimulus is light having at least one spectral component which can be absorbed by the photo-absorbing material of the photo-absorbing element to photothermally generate heat.

Fig. 1

a.

b.

c. Temperature

d. Refractive Index

EP 3 722 843 A1

# Direct Problem

**a.** Design - Joule Power

$$\Delta T = P_0 \otimes G_T$$

*N* loops, radius $r_i$, width $w(r_i)$

**b.** Temperature

$\Delta T$

$$P = P_0(1 + \alpha . \Delta T)$$

$$\delta = P \otimes G_\delta$$

**c.** Wavefront

OPD $\delta$

# Inverse Problem

**d.** Targeted Wavefront

OPD $\delta$

Fitness Estimation

vs

Target

Initial/New Population

**Genetic Algorithm**

Selection

Crossover & Mutation

Optimized Design

$P_0$

**Fig. 2**

EP 3 722 843 A1

Fig. 3

EP 3 722 843 A1

Fig. 4

**Fig. 5**

EP 3 722 843 A1

Fig. 6

Fig. 7

Fig. 8

Fig. 9

a.

Polymer layer

$h$

$r_1$

Resistive loop

b.

$\Delta\varphi$ (rad)

$\Delta\varphi < 0$

$\Delta\varphi = 0$

$\Delta\varphi > 0$

$h$ ($\mu m$)

$r_1$ ($\mu m$)

c.

Design

OPD

$\delta$ ($\lambda$ unit)

6V

OPD Profile

$\delta$ ($\lambda$ unit)

X($\mu m$)

6 V

Wavefront

Fig. 10

**Fig. 11**

EP 3 722 843 A1

EP 3 722 843 A1

Fig. 12

33

**Fig. 13**

# Fig. 14

Fig. 15

**Fig. 16**

Europäisches
Patentamt

European
Patent Office

Office européen
des brevets

# EUROPEAN SEARCH REPORT

Application Number

EP 19 38 2276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S59 193431 A (CANON KK) 2 November 1984 (1984-11-02) * the whole document * | 1-6, 10-15 | INV. G02B3/00 G02F1/01 G02B13/00 |
| A | WO 2019/053054 A1 (FUNDACIO INST DE CIENCIES FOTÒNIQUES [ES] ET AL.) 21 March 2019 (2019-03-21) * the whole document * | 1-15 | |
| A,D | WO 2015/181222 A1 (FUNDACIÓ INST DE CIÈNCIES FOTÒNIQUES [ES] ET AL.) 3 December 2015 (2015-12-03) * abstract; figures 3A-3C,8 * | 1-15 | |
| A | GUILLAUME BAFFOU ET AL: "Thermal Imaging of Nanostructures by Quantitative Optical Phase Analysis", ACS NANO, vol. 6, no. 3, 27 March 2012 (2012-03-27), pages 2452-2458, XP055627670, US ISSN: 1936-0851, DOI: 10.1021/nn2047586 * the whole document * | 7 | TECHNICAL FIELDS SEARCHED (IPC) G02B G02F |

The present search report has been drawn up for all claims

| Place of search | Date of completion of the search | Examiner |
|---|---|---|
| Munich | 9 October 2019 | Girardin, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 38 2276

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2019

| Patent document cited in search report | | Publication date | Patent family member(s) | | Publication date |
|---|---|---|---|---|---|
| JP S59193431 | A | 02-11-1984 | JP H0521215 B2 | | 23-03-1993 |
| | | | JP S59193431 A | | 02-11-1984 |
| WO 2019053054 | A1 | 21-03-2019 | EP 3454006 A1 | | 13-03-2019 |
| | | | WO 2019053054 A1 | | 21-03-2019 |
| WO 2015181222 | A1 | 03-12-2015 | CN 106662677 A | | 10-05-2017 |
| | | | EP 3149526 A1 | | 05-04-2017 |
| | | | JP 2017524990 A | | 31-08-2017 |
| | | | US 2015346394 A1 | | 03-12-2015 |
| | | | WO 2015181222 A1 | | 03-12-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9606419 B2

- EP 3149526 A1

**Non-patent literature cited in the description**

- **Z. CAI et al.** A new fabrication method for all-PDMS waveguides. *Sensors Actuators, A Phys.,* 2013, vol. 204, 44-47